# EUROPEAN PATENT SPECIFICATION

(11) **EP 1 646 203 B1**
(45) Date of publication and mention of the grant of the patent: **19.09.2007**
(21) Application number: 05256072.9
(22) Date of filing: 29.09.2005
(51) Int. Cl.: H04L 29/06

(54) **Device, method, system and program for setting management**
Einheit, Verfahren, System und Programm zur Verwaltungfestlegung
Unité, procédé, système et programme d'assignation de gestion

(30) Priority: 08.10.2004 JP 2004296236
(43) Date of publication of application: 12.04.2006
(73) Proprietor: Brother Kogyo Kabushiki Kaisha, Nagoya-shi, Aichi-ken 467-8561 (JP)
(72) Inventor: Ohara, Kiyotaka Brother Kogyo K.K., T.P. & IP D., Nagoya-shi Aichi-ken 467-8562 (JP)
(74) Representative: Smith, Samuel Leonard

(56) References cited:
- US-A- 5 787 248
- US-A1- 2003 061 320
- US-A1- 2004 111 494

## Description

### Cross Reference to Related Application

This application claims priority from Japanese Patent Application No. 2004-296236, filed on October 8, 2004.

### Technical Field

Aspects of the technical field relate to a device, method, system and program for setting parameters to a target device which is connected to the device via a network.

### Background

In recent years, devices capable of using various functions usable via a network (hereinafter referred to as "usable functions") according to a communication standard such as IPv4 (Internet Protocol version 4) and IPv6 (Internet Protocol version 6) have become widespread. Such a device is configured so that parameters corresponding to one or more communication standards can be set as "usage parameters" for using the usable functions. Here, the "usable functions" include a function of transmitting and receiving e-mails (in this case, identification information (IP address) on a mail server is a usage parameter), a function of figuring out identification information on another device communicating with the device based on a domain name (in this case, identification information on a DNS (Domain Name System) server is a usage parameter), a function of communicating with an external network (in this case, identification information on a gateway is a usage parameter), etc.

A technique capable of facilitating the setting of such usage parameters has been proposed in Japanese Patent Provisional Publication No.2004-120580, in which a device requesting the execution of a process (computer 2) searches for other devices (printers 3) existing on a network (multicasts search packets and receives search reply packets returned from the devices in response to the search packets), lets a user select one of the devices found in the search process for executing the process, and transmits data (print data), containing an instruction for requesting the execution of the process to the device selected by the user.

Incidentally, such setting of usage parameters is generally implemented by a setting management program which is configured to display a setting screen including setting portions (input windows, etc.) for letting the user set or designate usage parameters corresponding to (regarding) IPv4 or IPv6. However, since IPv6 is a successor communication standard (protocol) to IPv4 and has yet to be widely adopted, devices for which only usage parameters regarding IPv6 can be set are not suitable for many systems. On the other hand, with devices to which only usage parameters regarding IPv4 can be set, appropriate setting of usage parameters will not be possible in the future when IPv6 has become widely adopted. Document US 5787248 discloses a computer program product causing a computer to perform a setting management process comprising the instructing step mentioned in claim 1.

### Summary

Aspects can provide a method, system and program for managing the settings of usage parameters, which is capable of realizing the setting of usage parameters for two or more communication standards (protocols),.

It is noted that various connections are set forth between elements in the following description. It is noted that these connections in general and unless specified otherwise, may be direct or indirect and that this specification is not intended to be limiting in this respect. Aspects may be implemented in computer software as programs storable on computer-readable media including but not limited to RAMs, ROMs, flash memory, EEPROMs, CD-media, DVD-media, temporary storage, hard disk drives, floppy drives, permanent storage, and the like.

The invention is defined by claims 1, 21, 23 and various embodiments are defined by the dependent claims.

### Brief Description of the Accompanying Drawings

Fig. 1 is a block diagram showing a setting management system in accordance with an illustrative embodiment.
Figs. 2 through 7 are flow charts showing the procedure of an IP setting screen process executed by a PC in the setting management system in accordance with a first illustrative embodiment.
Fig. 8 is a screen image showing a list screen displayed by the PC according to at least some aspects.
Fig. 9 is a screen image showing an ADS (Advanced Display Setting) screen displayed by the PC according to at least some aspects.
Fig. 10A is a screen image showing an example of a second screen (setting screen) displayed by the PC in a display mode "Normal mode" according to at least some aspects.
Fig. 10B is a screen image showing another example of the second screen displayed by the PC in the display mode "Normal mode" according to at least some aspects.
Fig. 11A is a screen image showing an example of the second screen displayed by the PC in a display mode "Full mode" according to at least some aspects.
Fig. 11B is a screen image showing another example of the second screen displayed by the PC in the display mode "Full mode" according to at least some aspects.
Fig. 12A is a screen image showing an example of the second screen displayed by the PC in a display mode "Another tab" according to at least some aspects.
Fig. 12B is a screen image showing another example of the second screen displayed by the PC in the display mode "Another tab" according to at least some aspects.
Fig. 13A is a screen image showing an example of the second screen displayed by the PC in a display mode "Pop up" according to at least some aspects.
Fig. 13B is a screen image showing another example of the second screen displayed by the PC in the display mode "Pop up" according to at least some aspects.
Fig. 14A is a screen image showing an IPv6 setting screen displayed by the PC according to at least some aspects.
Fig. 14B is a screen image showing an IPv4 setting screen displayed by the PC according to at least some aspects.
Fig. 15 is a flow chart showing part of the IP setting screen process in accordance with a second illustrative embodiment.
Fig. 16 is a flow chart showing part of the IP setting screen process in accordance with a third illustrative embodiment.
Fig. 17 is a flow chart showing a functional process executed for "IP address judgment" in Fig. 16 according to at least some aspects.
Fig. 18A is a screen image showing an example of a warning screen displayed by the PC in accordance with the third illustrative embodiment.
Fig. 18B is a screen image showing another example of the warning screen according to at least some aspects.
Fig. 19 is a flow chart showing part of the IP setting screen process in accordance with the third illustrative embodiment.
Fig. 20 is a flow chart showing part of the IP setting screen process in accordance with another illustrative embodiment.
Fig. 21 is a flow chart showing part of the IP setting screen process in accordance with another illustrative embodiment.

### Detailed Description

Referring now to the drawings, a description will be given in detail of at least some aspects.

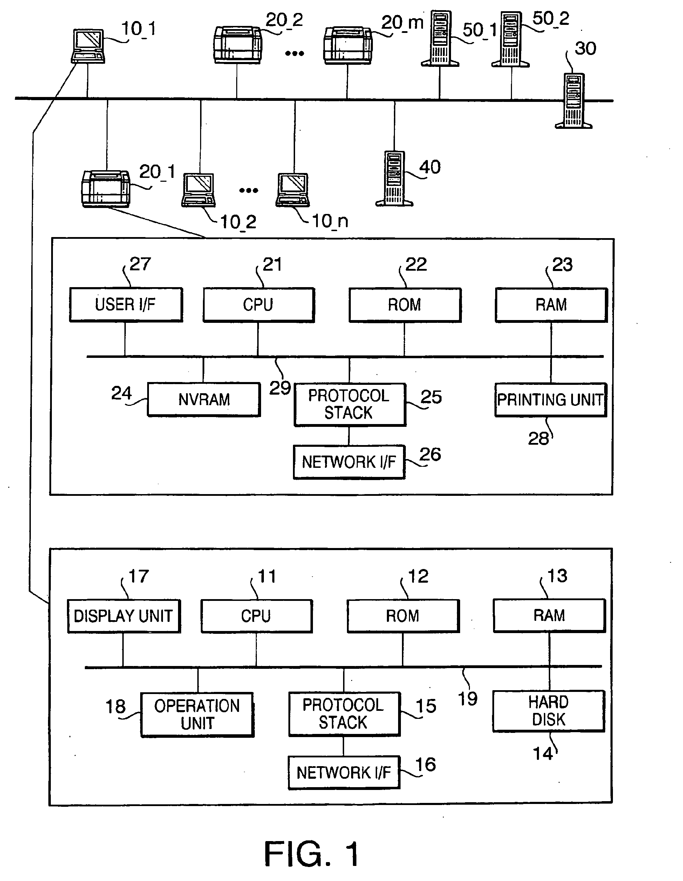

Fig. 1 is a block diagram showing a setting management system in accordance with an illustrative embodiment. As shown in Fig. 1, a plurality of PCs 10 (Personal Computers 10_1 - 10_n), a plurality of printers 20 (20_1 - 20_m), a gateway 30, a mail server 40, a primary DNS (Domain Name System) server 50_1, a secondary DNS server 50_2, etc. are connected together by a network capable of data communication.

Each PC 10 is a computer system of a well-known type, including a CPU (Central Processing Unit) 11, a ROM (Read Only Memory) 12, a RAM (Random Access Memory) 13, a hard disk 14, a protocol stack 15, a network interface (network I/F) 16, a display unit 17, an operation unit 18, etc. which are connected together by a bus 19. Each PC 10 functions as a network device when it is connected to the network via the network I/F 16.

While the protocol stack 15 is shown in Fig. 1 as a component connecting the network I/F 16 to the bus 19, the protocol stack 15 in Fig. 1 is only a symbol conceptualizing a state in which data communication by the network I/F 16 is realized by processes according to the protocol stack 15. Actually, the protocol stack 15 can be a program module installed (stored) in the hard disk 14 for implementing data communication according to both IPv4 (Internet Protocol version 4) and IPv6 (Internet Protocol version 6).

Among the PCs 10, the PC 10_1 is equipped with a setting management program for executing various processes which will be explained later, by which the PC 10_1 functions as a management device in accordance with aspects.

Each printer 20 is a network printer of a well-known type, including a CPU 21, a ROM 22, a RAM 23, an NVRAM (Non Volatile RAM) 24, a protocol stack 25, a network interface (network I/F) 26, a user interface (user I/F) 27, a printing unit 28, etc. which are connected by a bus 29. Each printer 20 functions as a network device when it is connected to the network via the network I/F 26.

The protocol stack 25 is a program module stored in the NVRAM 24, similarly to the protocol stack 15 of each PC 10.

The mail server 40 functions as an SMTP (Simple Mail Transport Protocol) server and a POP (Post Office Protocol) server.

In the following, at least some aspects in which operation of the PC 10_1 differs, will be described in detail.

### Illustrative Embodiment 1

### IP Setting Screen Process

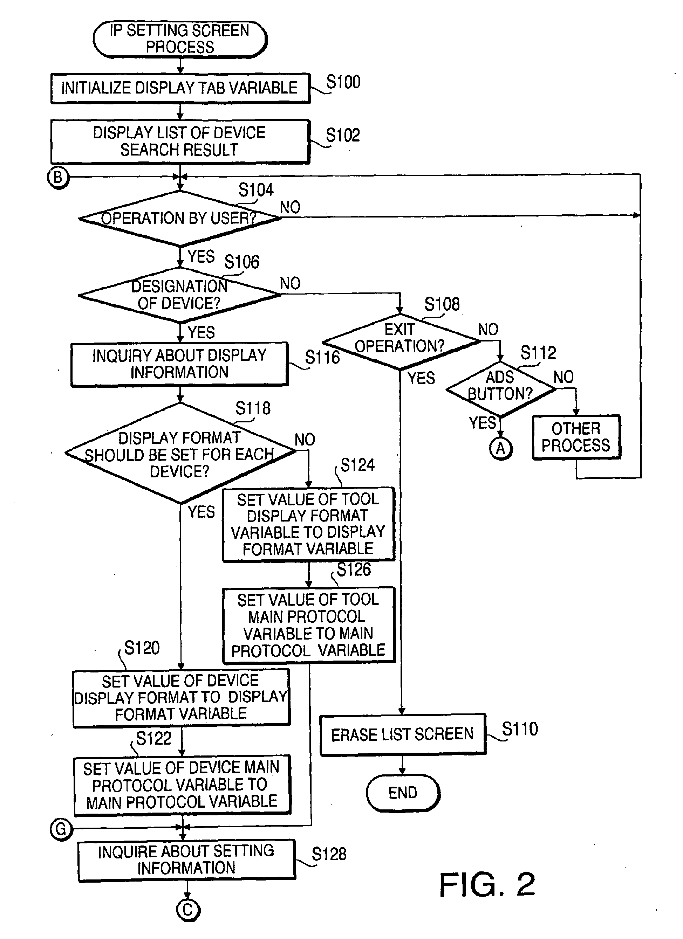

First, an IP setting screen process executed by (the CPU 11 of) the PC 10_1 will be explained in detail referring to flow charts of Figs. 2 - 7. The PC 10_1 executes the IP setting screen process according to the aforementioned setting management program.

Referring to Fig. 2, the PC 10_1 first initializes a variable "display tab variable" (S100). In this illustrative embodiment, the "display tab variable" is initialized to "GR". Subsequently, the PC 10_1 searches for devices (printers 20 in this illustrative embodiment) existing on the network and displays a list of the results of the device search on the display unit 17 (S102).

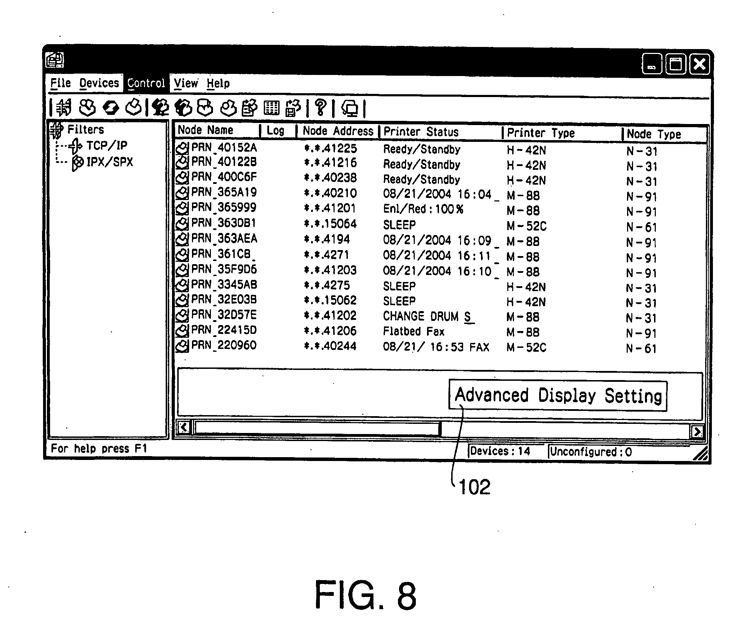

In step S102, the PC 10_1 transmits (broadcast & multicast) data for requesting devices on the network to send back general information according to IPv4 and IPv6. The "general information" means information that has been set to each device, such as parameters like the device name (Node Name). For a prescribed time period after collecting information returned from devices receiving the request data, the PC 10_1 displays a list screen (on which pieces of information from the devices are arranged in a list format for each device (Node Name)) on the display unit 17 as shown in Fig. 8. The list screen is provided with an "Advanced Display Setting" button 102 (hereinafter abbreviated as an "ADS button 102") for calling up an advanced display setting screen which is used for setting the display mode of a screen which will be explained later (second screen). After the list screen has been displayed as above, the user can perform an operation for designating one of the devices from the list, an operation for selecting the ADS button 102, an operation for ending the IP setting screen process (exit operation), etc. through the operation unit 18.

After displaying the list screen as above, the PC 10_1 waits for an operation by the user (S104: NO). When an operation is performed by the user (S104: YES), if the operation is the exit operation (S106: NO, S108: YES), the PC 10_1 erases the list screen (S110) and ends the IP setting screen process.

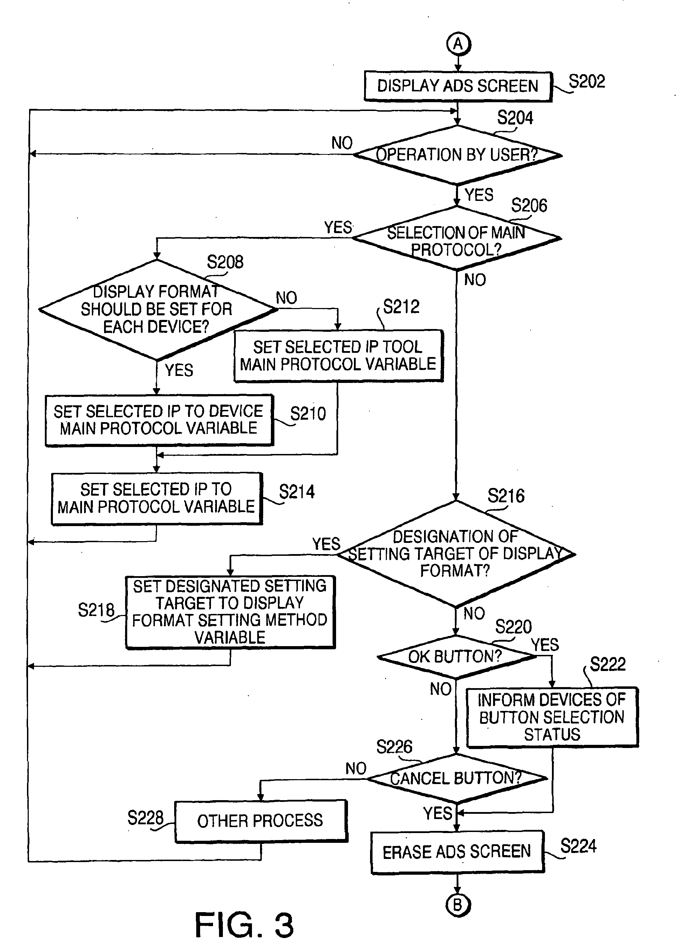

If the operation by the user is a selection (hereinafter also expressed as "pressing") of the ADS button 102 (S108: NO, S112: YES), the PC 10_1 executes a process shown in Fig. 3 (steps S202 - S224) for setting values to variables and informing devices of the values.

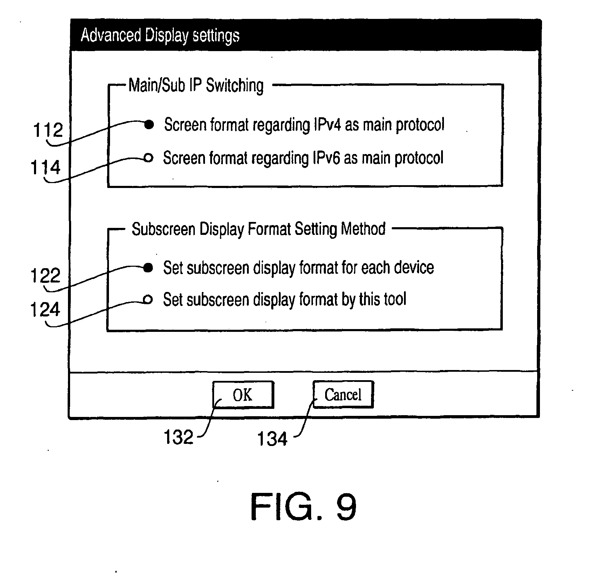

The process of Fig. 3 will be explained below. First, the PC 10_1 displays an ADS (Advanced Display Setting) screen (S202). Fig. 9 shows an example of the ADS screen, which includes IP designation buttons 112 and 114 (radio buttons pressed for designating which of IPv4 and IPv6 should be regarded as the main protocol (main communication standard) to be given higher priority in the displaying of the second screen which will be explained later), setting method designation buttons 122 and 124 (radio buttons pressed for designating whether the display format regarding the IP (IPv4 or IPv6) designated as a sub protocol (sub communication standard) with the IP designation buttons 112 and 114 (that is, the IP that is not designated as the main protocol with the buttons 112 and 114) should be set for each device or set uniformly by the PC 10_1 (tool)), an OK button 132, a "Cancel" button 134, etc. After the ADS screen has been displayed as above, the user can perform an operation for selecting a button 112, 114, 122, 124, 132 or 134 through the operation unit 18.

After displaying the ADS screen as above, the PC 10_1 waits for an operation by the user (S204: NO). When an operation is performed by the user (S204: YES), if the operation is the designation of an IP as the main protocol, that is, the pressing of the IP designation button 112 or 114 (S206: YES), the PC 10_1 checks whether the setting has been made which specifies that the display format should be set for each device (S208). In this step, the PC 10_1 refers to a variable "display format setting method variable" to which a value corresponding to the selection status of the setting method designation buttons 122 and 124 (a value "device" indicating "each device" or a value "PC" indicating the PC 10_1, for example) has been set, and judges that the setting specifying that the display format should be set for each device has been made (S208: YES) when the value "device" has been set to the "display format setting method variable". On the other hand, when the value "PC" has been set to the "display format setting method variable", the PC 10_1 judges that the setting specifying that the display format should be set uniformly by the PC 10_1 has been made (S208: NO). Incidentally, the "display format setting method variable" is initially set to "PC" (initial value).

If the setting has been made which specifies that the display format should be set - for each device (S208: YES), the PC 10_1 sets a value indicating the IP corresponding to the IP designation button 112 or 114 selected in step S204 to a variable "device main protocol variable" (S210), sets the value also to a variable "main protocol variable" (S214), and thereafter returns to step S204. In steps S210 and S214, a value indicating IPv4 (hereinafter simply referred to as a value "IPv4") is set to the variables when the IP designation button 112 (for designating IPv4 as the main protocol) has been selected. When the IP designation button 114 (for designating IPv6 as the main protocol) has been selected, a value indicating IPv6 (hereinafter simply referred to as a value "IPv6") is set to the variables. Incidentally, the "device main protocol variable" and the "main protocol variable" are initially set to "IPv4" (initial values).

On the other hand, if the setting has been made which specifies that the display format should be set uniformly by the PC 10_1 (S208: NO), the PC 10_1 sets a value indicating the IP corresponding to the IP designation button 112 or 114 selected in step S204 to a variable "tool main protocol variable" (S212), sets the value also to the "main protocol variable" (S214), and thereafter returns to step S204. In steps S212 and S214, the value "IPv4" is set to the variables when the IP designation button 112 (designating IPv4 as the main protocol) has been selected. When the IP designation button 114 (designating IPv6 as the main protocol) has been selected, the value "IPv6" is set to the variables. Incidentally, the "tool main protocol variable" is initially set to "IPv4" (initial value).

If the operation by the user in S204 is the designation of the setting target of the display format regarding the IP as the sub protocol (whether the display format should be set for each device or by the PC 10_1), that is, pressing the setting method designation button 122 or 124 (S206: NO, S216: YES), the PC 10_1 sets a value indicating the setting target ("device" or "PC") corresponding to the setting method designation button 122 or 124 selected in step S204 to the "display format setting method variable" (S218) and thereafter returns to step S204.

If the operation by the user in S204 is pressing the OK button 132 (S216: NO, S220: YES), the PC 10_1 informs devices about the selection status of the buttons at this point (S222), erases the ADS screen (S224), and thereafter returns to step S104 of Fig. 2. In step S222, the PC 10_1 transmits notification data indicating the values of the "device main protocol variable" and the "display format setting method variable" at the point when the OK button 132 was pressed to information source devices (devices from which the general information was obtained in S102 of Fig. 2). Each device receiving the notification data sets the values as its own parameters by storing the values in the NVRAM 24. Incidentally, in each device, the parameters corresponding to the "device main protocol variable" and the "display format setting method variable" are initially set to "IPv4" and "PC", respectively (initial values).

If the operation by the user in S204 is the pressing of the "Cancel" button 134 (S220: NO, S226: YES), the PC 10_1 advances to step S224 without executing step S222.

If the operation by the user in S204 is none of the above operations (S226: NO), the PC 10_1 executes a process corresponding to the operation (other process) (S228) and thereafter returns to step S204.

Returning to Fig. 2, if the operation by the user in step S104 is the designation of a device (S106: YES), the PC 10_1 inquires of the designated device (hereinafter referred to as a "target device" (one of the printers 20 in this illustrative embodiment)) about display information to be referred to for displaying the second screen which will be explained later (S116). As mentioned above, the notification data indicating the values of the "device main protocol variable" and the "display format setting method variable" have been sent to the devices and the values have been set as parameters of the devices in step S222. A display mode ("Normal mode", "Full mode", "Another tab" or "Pop up" which will be explained later) to be used for displaying the second screen regarding each device (display format) can be set for each device as will be explained later. In step S116, inquiry data, inquiring about the display format and information indicating the values of the variables which have already been sent to the target device (notification information), etc., is transmitted to the target device. The target device receiving the inquiry data sends back display data representing the "device main protocol variable" (indicating which of IPv4 and IPv6 should be regarded as the main protocol), the "display format setting method variable" (indicating whether the display mode should be determined based on information from the device) and the display format (indicating which display mode should be used for displaying the second screen regarding the target device). Among the display data returned from the target device, the "display format" will hereinafter be referred to as a "device display format".

Subsequently, the PC 10_1 checks whether the setting has been made which specifies that the display format should be set for each device based on the "display format setting method variable" returned from the target device in response to the inquiry of S116, similarly to the check in step S208 (S118).

If the setting has been made which specifies that the display format should be set for each device (S118: YES), the PC 10_1 sets the values of the "device display format" and the "device main protocol variable" returned from the target device in response to the inquiry of S116 to a variable "display format variable" and the variable "main protocol variable" respectively (S120, S122) and thereafter advances to the next step S128.

On the other hand, if the setting has been made which specifies that the display format should be set uniformly by the PC 10_1 (S118: NO), the PC 10_1 sets the values of a "tool display format variable" and the "tool main protocol variable" which have been registered in the PC 10_1 itself to the "display format variable" and the "main protocol variable" respectively (S124, S126) and thereafter advances to the next step S128.

Subsequently, the PC 10_1 inquires of the target device about setting information (S128). In this step, the PC 10_1 transmits inquiry data to the target device in order to inquire about parameters regarding a subscreen of a setting screen to be displayed in a subsequent step (i.e. S340) as the setting information for the target device. The target device receiving the inquiry data sends back setting data which indicates the setting information. When information inquired by the inquiry data has not been set to the target device yet, the target device sends back setting data that can specify that the information has not been set yet (void parameter, etc.).

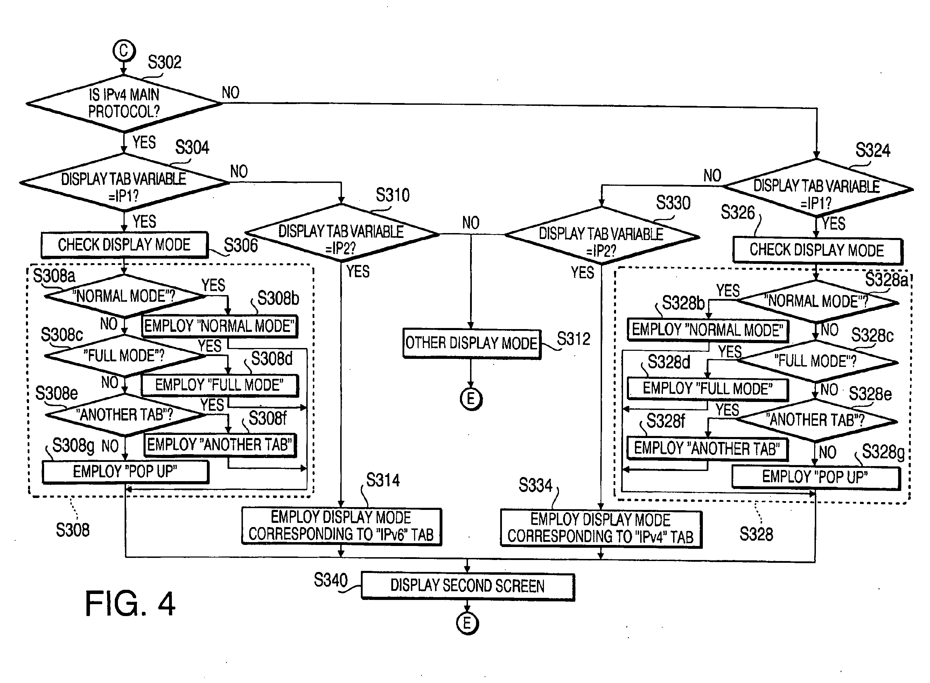

Based on the setting data from the target device in response to the inquiry of S128, the PC 10_1 displays the setting screen (which is used for setting parameters to the target device (remote setup)) on the display unit 17 according to a process shown in Fig. 4 (steps S302 - S340).

The process of Fig. 4 will be explained below. First, the PC 10_1 checks whether the main protocol that has been set for the displaying of the second screen regarding the target device is IPv4 or IPv6 (S302). In this step, the PC 10_1 refers to the aforementioned "main protocol variable" and regards the IP indicated by the "main protocol variable" as the main protocol.

If the main protocol is IPv4 (S302: YES), the PC 10_1 checks the "display tab variable" (S304). While the "display tab variable" is set to (initialized to) "GR" in step S100 of Fig. 2, the "display tab variable" can be set to "GR", "IP1", "IP2", etc. in a subsequent step.

If the "display tab variable" has been set to "IP1" (S304: YES), the PC 10_1 checks the display mode that should be used for displaying the second screen regarding the target device (S306). In this step, the PC 10_1 refers to the aforementioned "display format variable" and judges that a display mode indicated by the "display format variable" ("Normal mode", "Full mode", "Another tab" or "Pop up") should be used for displaying the second screen.

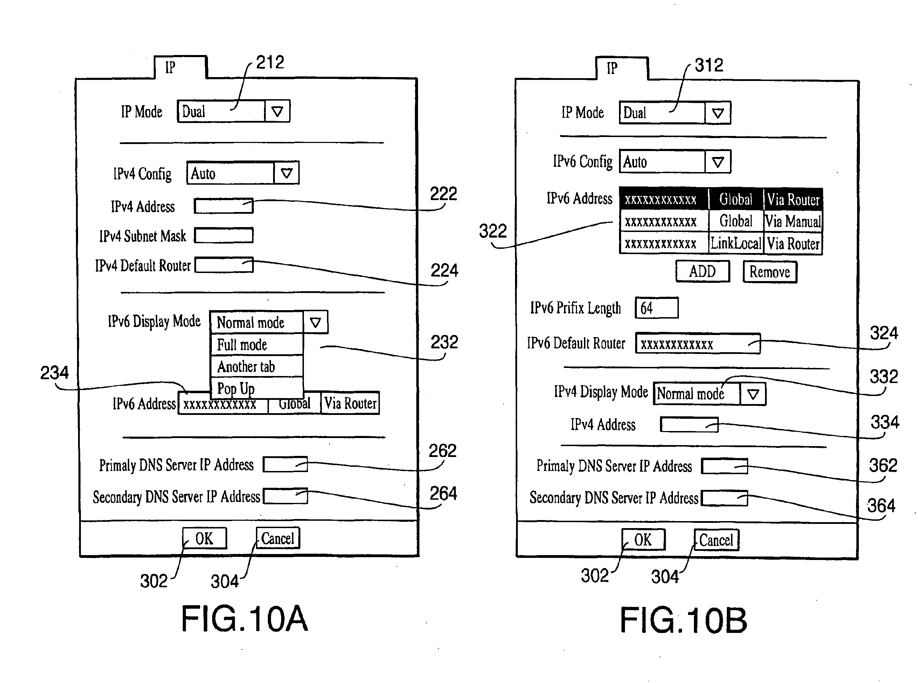

Subsequently, the PC 10_1 determines to display the second screen according to the display mode checked in step S306 (S308). Specifically, if the display mode checked in S306 is "Normal mode" (S308a: YES), the PC 10_1 determines to display the second screen in the display mode "Normal mode" (S308b). In the "Normal mode", a screen like the one shown in Fig. 10A, including a first area for designating the IP mode of the device, a second area for making settings regarding IPv4, a third area for displaying parameters regarding IPv6, a fourth area for setting IP addresses of the DNS servers, an OK button 302, a "Cancel" button 304, etc., will be displayed as the second screen in a subsequent step (i.e. S340). In the second screen shown in Fig. 10A, the first area includes a list box 212 (as a pull-down menu) allowing the user to selectively designate IPv4, IPv6 or Dual as the IP mode of the device. The second area includes text boxes 222, 224, etc. used for entering an IP address of the device, an IP address of the gateway 30 (the so-called "default gateway"), etc. in the IPv4 format. The third area includes a list box 232 indicating the display mode ("Normal mode", "Full mode", "Another tab" or "Pop up") that has been set for a screen regarding IPv6 settings, a text box 234 indicating an IP address of the device in the IPv6 format, etc. The fourth area includes text boxes 262 and 264 used for entering IP addresses of the primary DNS server 50_1 and the secondary DNS server 50_2. Incidentally, the third area on the second screen in the "Normal mode" is only for displaying parameters, in which entry of parameters in list boxes or text boxes is not possible. In short, the second screen in the "Normal mode" allows the user to set parameters regarding only one IP (IPv4 in the example of Fig. 10A).

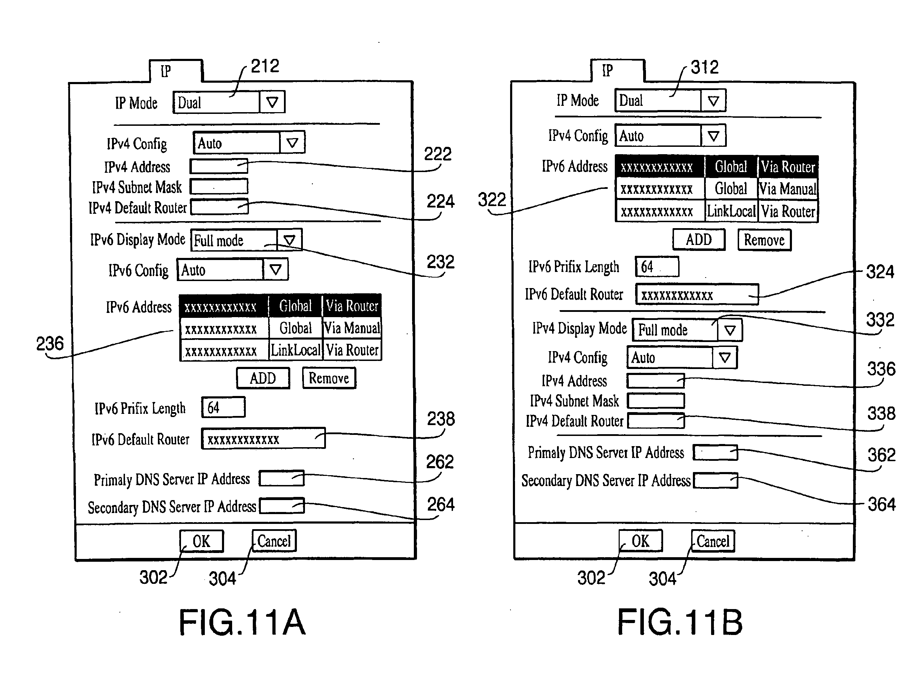

If the display mode checked in S306 is "Full mode" (S308a: NO, S308c: YES), the PC 10_1 determines to display the second screen in the display mode "Full mode" (S308d). In the "Full mode", a screen like the one shown in Fig. 11A, including first through fourth areas like the screen in the "Normal mode", will be displayed as the second screen in the subsequent step (i.e. S340). In the second screen shown in Fig. 11A, the third area includes a text box 236 in which a plurality of IP addresses of the device in the IPv6 format can be entered, a text box 238 used for entering an IP address of the default router in the IPv6 format, etc., in addition to the aforementioned list box 232.

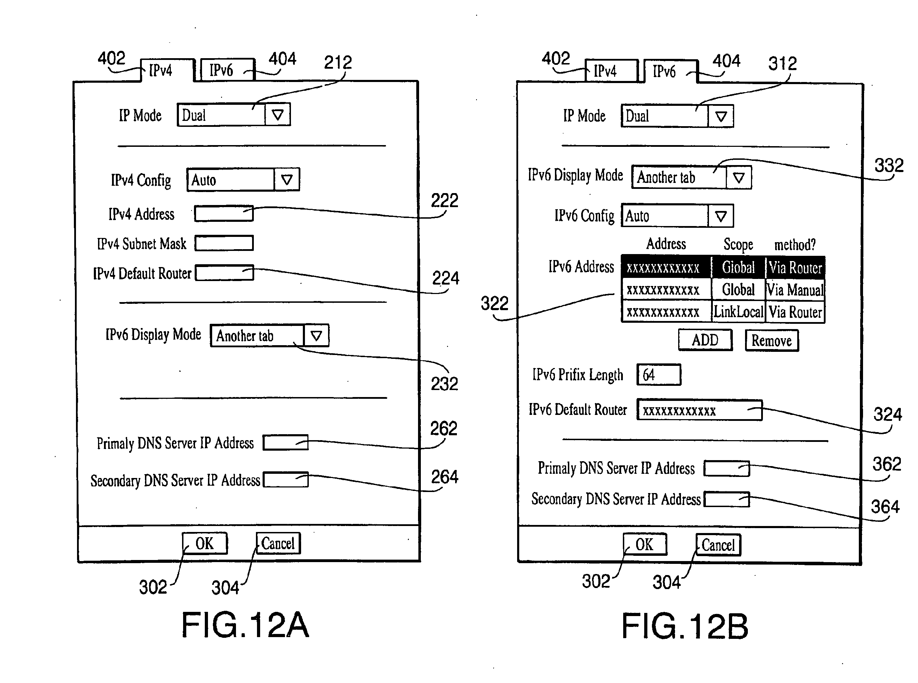

If the display mode checked in S306 is "Another tab" (S308c: NO, S308e: YES), the PC 10_1 determines to display the second screen in the display mode "Another tab" (S308f). In the display mode "Another tab", a screen like the one shown in Fig. 12A, which is basically the same as the screen in the "Normal mode" except for tabs at the top of the screen, will be displayed as the second screen in the subsequent step (i.e. S340). In the second screen shown in Fig. 12A, the "IP" tab shown in Fig. 10A (used for the switching of screen into the second screen) is replaced with an "IPv4" tab 402 and a new "IPv6" tab 404 is added. With the second screen in the display mode "Another tab", the user is allowed to select the "IPv4" tab 402 or "IPv6" tab 404 in order to view a second screen that regards IPv4 or IPv6 as the main protocol.

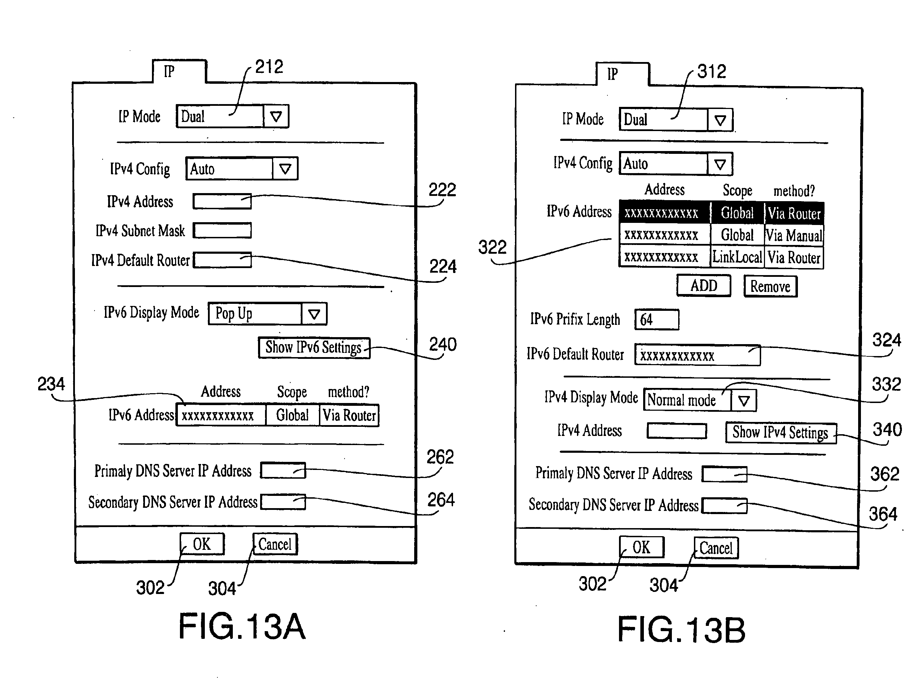

If the display mode checked in S306 is "Pop up" (S308e: NO), the PC 10_1 determines to display the second screen in the display mode "Pop up" (S308g). In the display mode "Pop up", a screen like the one shown in Fig. 13A, including first through fourth areas like the screen in the "Normal mode", will be displayed as the second screen in the subsequent step (i.e. S340). In the second screen shown in Fig. 13A, the third area includes a "Show IPv6 Settings" button 240 (hereinafter abbreviated as "SI6 button 240") for calling up a pop-up screen which will be explained later, in addition to the list box 232 and the text box 234. With the second screen of Fig. 13A in the display mode "Pop up", the user is allowed to select the SI6 button 240 to view the pop-up screen.

As above, in the above second screens which are displayed when the main protocol is IPv4 in S302 and the "display tab variable" is "IP1" in S304, the area (second area) for making settings regarding IPv4 is placed in the upper part of the screen so that the user can recognize that IPv4 is the main protocol.

In step S304, if the "display tab variable" has not been set to "IP1" (S304: NO), the PC 10_1 checks whether the "display tab variable" has been set to "IP2" (S310).

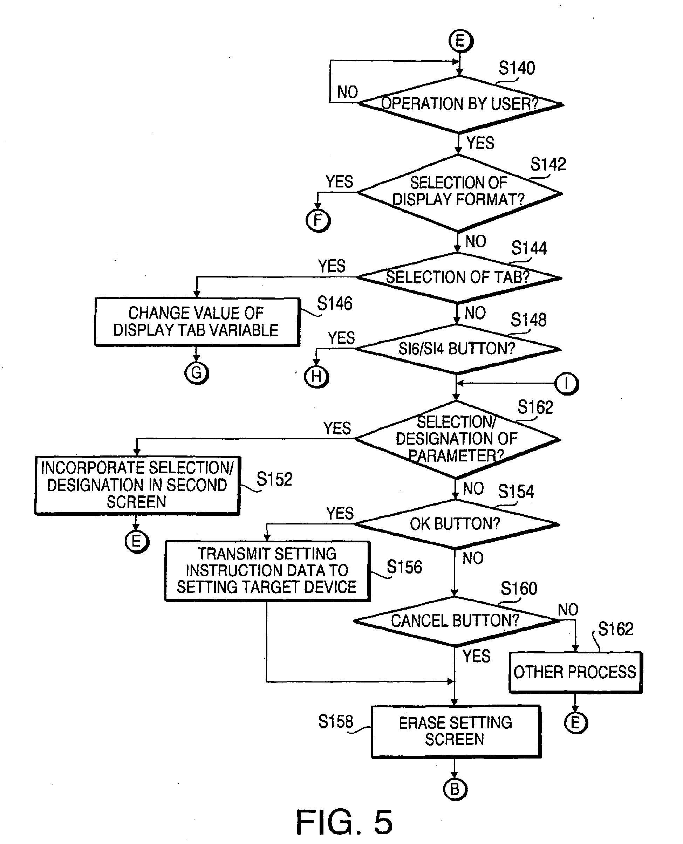

If the "display tab variable" has not been set to "IP2" (S310: NO), the PC 10_1 displays another subscreen of the setting screen in a display mode corresponding to the value of the "display tab variable" (S312) and thereafter advances to step S140 of Fig. 5. In step S312, when the "display tab variable" has been set to "GR" for example, the PC 10_1 displays a subscreen (which can be called up by selecting a particular tab from other screens) for displaying information unique to the target device (device name, MAC address, etc.) on the display unit 17.

If the "display tab variable" has been set to "IP2" (S310: YES), the PC 10_1 determines to display the second screen in a display mode corresponding to the "IPv6" tab 404 (S314). Since this state (in which the main protocol is IPv4 in S302 and the "display tab variable" is "IP2" in S304) is caused when the "IPv6" tab 404 is selected by the user as will be explained later, the PC 10_1 in step S314 determines to display a screen like the one shown in Fig. 12B, including a first area for designating the IP mode of the device, a second area for making settings regarding IPv6, a third area for setting IP addresses of the DNS servers, etc., as the second screen corresponding to the "IPv6" tab 404. In the second screen shown in Fig. 12B, the first area includes a list box 312 (as a pull-down menu) allowing the user to selectively designate the IP mode of the device. The second area includes a text box 322 in which a plurality of IP addresses of the device can be entered, a text box 324 used for entering an IP address of the default router, etc. The third area includes text boxes 262 and 264 used for entering IP addresses of the primary DNS server 50_1 and the secondary DNS server 50_2. Incidentally, the above text boxes are for entering IP addresses in the IPv6 format.

In step S302, if the main protocol is IPv6 (S302: NO), the PC 10_1 checks the "display tab variable" (S324).

If the "display tab variable" has been set to "IP1" (S324: YES), the PC 10_1 checks the display mode that should be used for displaying the second screen regarding the target device, similarly to step S306 (S326).

Subsequently, the PC 10_1 determines to display the second screen according to the display mode checked in step S326 (S328). Specifically, if the display mode checked in S326 is "Normal mode" (S328a: YES), the PC 10_1 determines to display the second screen in the display mode "Normal mode" (S328b). In the "Normal mode", a screen like the one shown in Fig. 10B, including a first area for designating the IP mode of the device, a second area for making settings regarding IPv6, a third area for displaying parameters regarding IPv4, a fourth area for setting IP addresses of the DNS servers, an OK button 302, a "Cancel" button 304, etc., is determined as the second screen to be displayed in the subsequent step (i.e. S340). In the second screen shown in Fig. 10B, the first area includes a list box 312 (as a pull-down menu) allowing the user to selectively designate the IP mode of the device. The second area includes a text box 322 in which a plurality of IP addresses of the device in the IPv6 format can be entered, a text box 324 used for entering an IP address of the gateway 30 (the so-called "default gateway") in the IPv6 format, etc. The third area includes a list box 332 (as a pull-down menu) indicating the display mode ("Normal mode", "Full mode", "Another tab" or "Pop up") that has been set for a screen regarding IPv4 settings, a text box 334 indicating an IP address of the device in the IPv4 format, etc. The fourth area includes text boxes 362 and 364 used for entering IP addresses of the primary DNS server 50_1 and the secondary DNS server 50_2. Incidentally, the third area on the second screen in the "Normal mode" is only for displaying parameters, in which entry of parameters in list boxes or text boxes is not possible. In short, the second screen in the "Normal mode" allows the user to set parameters regarding only one IP (IPv6 in the example of Fig. 10B).

If the display mode checked in S326 is "Full mode" (S328a: NO, S328c: YES), the PC 10_1 determines to display the second screen in the display mode "Full mode" (S328d). In the "Full mode", a screen like the one shown in Fig. 11B, including first through fourth areas like the screen in the "Normal mode", is determined as the second screen to be displayed in the subsequent step (i.e. S340). In the second screen shown in Fig. 11B, the third area includes text boxes 336 and 338 used for entering an IP address of the device and an IP address of the default router in the IPv4 format, etc., in addition to the aforementioned list box 332.

If the display mode checked in S326 is "Another tab" (S328c: NO, S328e: YES), the PC 10_1 determines to display the second screen in the display mode "Another tab" (S328f). In the display mode "Another tab", a screen like the one shown in Fig. 12B, which is basically the same as the screen in the "Normal mode" except for tabs at the top of the screen, is determined as the second screen to be displayed in the subsequent step (i.e. S340). In the second screen shown in Fig. 12B, the "IP" tab shown in Fig. 10B (used for the switching of screen into the second screen) is replaced with an "IPv6" tab 404 and a new "IPv4" tab 402 is added. With the second screen in the display mode "Another tab", the user is allowed to select the "IPv4" tab 402 or "IPv6" tab 404 in order to view a second screen that regards IPv4 or IPv6 as the main protocol.

If the display mode checked in S326 is "Pop up" (S328e: NO), the PC 10_1 determines to display the second screen in the display mode "Pop up" (S328g). In the display mode "Pop up", a screen like the one shown in Fig. 13B, including first through fourth areas like the screen in the "Normal mode", is determined as the second screen to be displayed in the subsequent step (i.e. S340). In the second screen shown in Fig. 13B, the third area includes a "Show IPv4 Settings" button 340 (hereinafter abbreviated as "SI4 button 340") for calling up a pop-up screen which will be explained later, in addition to the list box 332 and the text box 334. With the second screen of Fig. 13B in the display mode "Pop up", the user is allowed to select the SI4 button 340 to view the pop-up screen.

As above, in the above second screens which are displayed when the main protocol is IPv6 in S302 and the "display tab variable" is "IP1" in S324, the area (second area) for making settings regarding IPv6 is placed in the upper part of the screen so that the user can recognize that IPv6 is the main protocol.

In step S324, if the "display tab variable" has not been set to "IP1" (S324: NO), the PC 10_1 checks whether the "display tab variable" has been set to "IP2" (S330).

If the "display tab variable" has not been set to "IP2" (S330: NO), the PC 10_1 advances to the aforementioned step S312.

On the other hand, if the "display tab variable" has been set to "IP2" (S330: YES), the PC 10_1 determines to display the second screen in a display mode corresponding to the "IPv4" tab 402 (S334). Since this state (in which the main protocol is IPv6 in S302 and the "display tab variable" is "IP2" in S324) is caused when the "IPv4" tab 402 is selected by the user as will be explained later, the PC 10_1 in step S334 determines to display the second screen in the display mode corresponding to the "IPv4" tab 402. Specifically, a screen like the one shown in Fig. 12A, including a first area for designating the IP mode of the device, a second area for making settings regarding IPv4, a third area for setting IP addresses of the DNS servers, etc., is determined to be the second screen.

Incidentally, the inquiry data transmitted in step S128 inquires of the target device about parameters that can be set on the second screen explained above, as the information corresponding to (parameters regarding) the second screen. The second screen is displayed in the subsequent step S340 while incorporating the parameters (obtained from the target device in response to the inquiry data) in the selection/designation status of the list boxes and text boxes.

After determining the display mode in step S308 or S328, the PC 10_1 displays the setting screen (second screen) on the display unit 17 in the determined display mode (S340), and thereafter advances to step S140 of Fig. 5.

After the setting screen (second screen) has been displayed as above, the user can perform an operation for selecting a tab, an operation for selecting a parameter from a list box, an operation for entering a parameter in a text box, an operation for selecting a button, etc. through the operation unit 18.

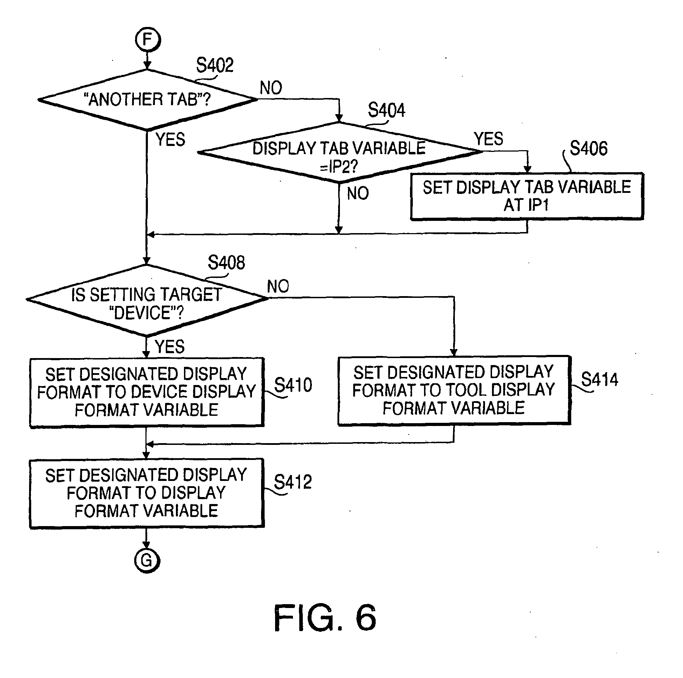

Referring to Fig. 5, after displaying the setting screen as above, the PC 10_1 waits for an operation by the user (S140: NO). When an operation is performed by the user (S140: YES), if the operation is a selection (designation) of a display format of screens for the settings regarding IPv6 or IPv4 from the list box 232 or 332 on the second screen (S142: YES), the PC 10_1 changes the values of related variables according to the designated display format. In this illustrative embodiment, the PC 10_1 changes the variables by executing a process shown in Fig. 6 (S402 - S414).

Referring to Fig. 6, the PC 10_1 first checks whether the display format designated in S140 of Fig. 5 is "Another tab" (S402). If the designated display format is not "Another tab" (S402: NO), the PC 10_1 checks whether the "display tab variable" has been set to "IP2" (S404). If the "display tab variable" has been set to "IP2" (S404: YES), the PC 10_1 sets the "display tab variable" to "IP1" (S406) and advances to the next step S408. If the "display tab variable" has not been set to "IP2" (S404: NO), the PC 10_1 advances to step S408 skipping step S406. In these steps, when a display format other than "Another tab" is designated by the user in the state in which the "display tab variable" is "IP2" (i.e. in the state in which the display format is "Another tab"), the display format is prevented from staying "Another tab" by restoring the "display tab variable" from "IP2" to "IP1".

If the designated display format is "Another tab" (S402: YES), the PC 10_1 advances to step S408 skipping steps S404 and S406.

In step S408, the PC 10_1 checks whether the setting specifying that the display format should be set for each device has been made based on the "display format setting method variable", similarly to the check in step S118 of Fig. 2 (S408). If the setting target of the display format is "device" (S408: YES), the PC 10_1 sets the display format designated in step S140 of Fig. 5 to a "device display format variable" and the aforementioned "display format variable" (S410, S412) and returns to step S128 of Fig. 2. On the other hand, if the setting target of the display format is "PC", that is, the PC 10_1 (S408: NO), the PC 10_1 sets the display format designated in step S140 of Fig. 5 to the aforementioned "tool display format variable" and "display format variable" (S414, S412) and returns to step S128 of Fig. 2.

Returning to Fig. 5, if the operation by the user in S140 is the switching of the setting screen to another subscreen, that is, a selection of a tab (S142: NO, S144: YES), the PC 10_1 changes the value of the "display tab variable" according to the selected tab (S146) and returns to step S128 of Fig. 2. In step S146, the "display tab variable" is set to a value corresponding to the "main protocol variable" (indicating which of IPv4 and IPv6 should be regarded as the main protocol in the displaying of the second screen). For example, in cases where the main protocol is IPv4, the "display tab variable" is set to "IP1" when the "IP" tab or the "IPv4" tab 402 is selected, while the "display tab variable" is set to "IP2" when the "IPv6" tab 404 is selected. In cases where the main protocol is IPv6, the "display tab variable" is set to "IP1" when the "IP" tab or the "IPv6" tab 404 is selected, while the "display tab variable" is set to "IP2" when the "IPv4" tab 402 is selected. Incidentally, when a tab other than the "IP" tab, the "IPv4" tab 402 or the "IPv6" tab 404 is selected, the "display tab variable" is set to a value (e.g. "GR") corresponding to the selected tab, irrespective of whether the main protocol is IPv4 or IPv6.

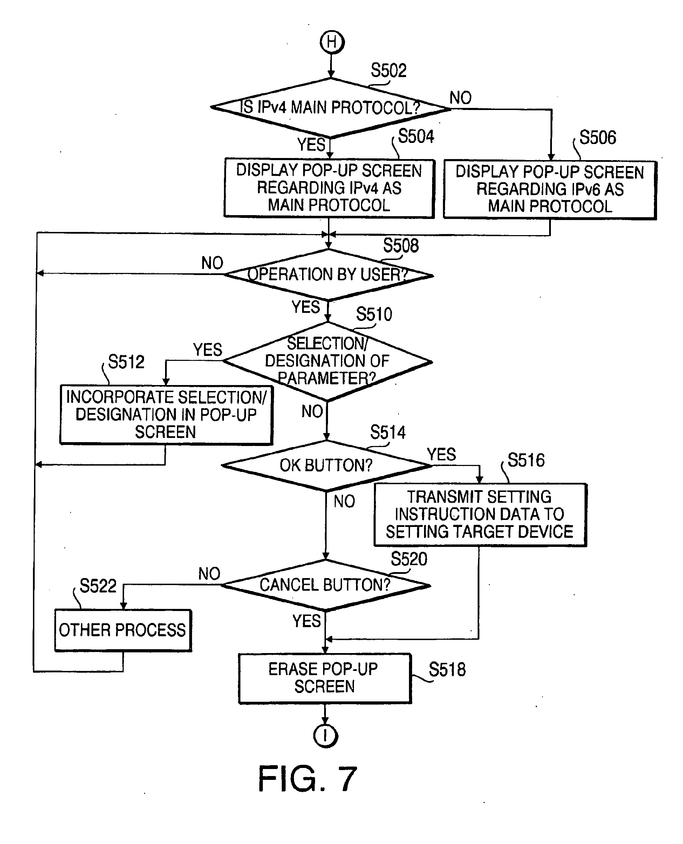

If the operation by the user in S140 is pressing the SI6 button 240 or the SI4 button 340 on the second screen (S144: NO, S148: YES), the PC 10_1 lets the user make settings regarding IPv6 or IPv4 by executing a process shown in Fig. 7 (S502 - S518).

Referring to Fig. 7, the PC 10_1 first checks whether the main protocol that has been set for displaying the second screen regarding the target device is IPv4 or IPv6, similar to the check in S302 of Fig. 4 (S502).

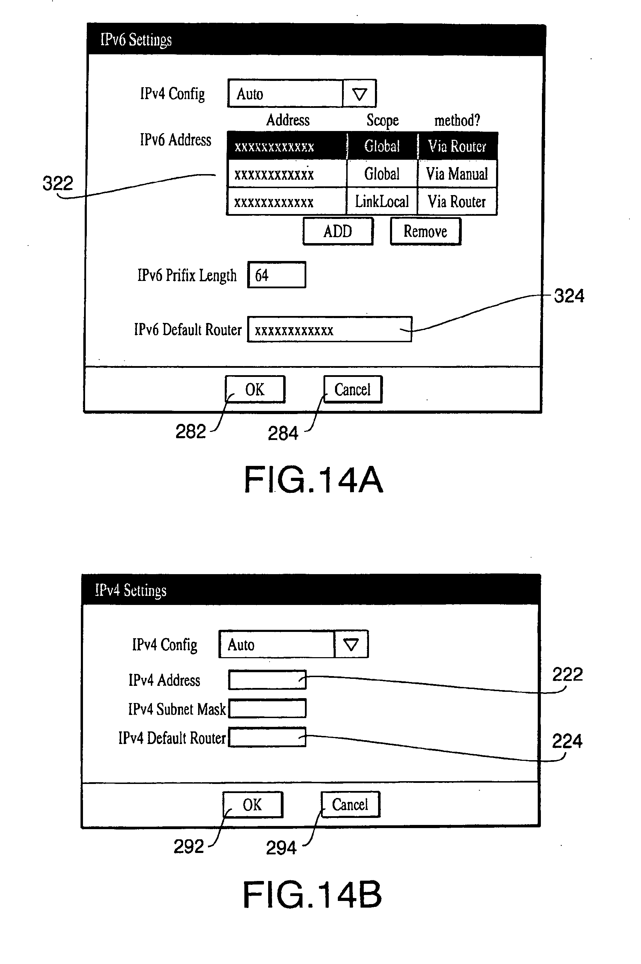

If the main protocol is IPv4 (S502: YES), the PC 10_1 displays a pop-up screen regarding IPv4 as the main protocol on the display unit 17 (S504). In this step, an IPv6 setting screen like the one shown in Fig. 14A, including the items in the second area of the second screen of Fig. 10B, is displayed as the pop-up screen. The IPv6 setting screen also includes an OK button 282 and a "Cancel" button 284.

On the other hand, if the main protocol is IPv6 (S502: NO), the PC 10_1 displays a pop-up screen regarding IPv6 as the main protocol on the display unit 17 (S506). In this step, an IPv4 setting screen like the one shown in Fig. 14B, including the items in the second area of the second screen of Fig. 10A, is displayed as the pop-up screen. The IPv4 setting screen also includes an OK button 292 and a "Cancel" button 294.

After the pop-up screen has been displayed by step S504 or S506, the user can perform an operation for selecting/designating a parameter, an operation for selecting a button, etc. through the operation unit 18. -

After displaying the pop-up screen as above, the PC 10_1 waits for an operation by the user (S508: NO). When an operation is performed by the user (S508: YES), if the operation is a selection/designation of a parameter (S510: YES), the PC 10_1 incorporates the selection/designation in the pop-up screen (S512) and returns to step S508.

If the operation by the user in S508 is pressing the OK button 282 or 292 (S510: NO, S514: YES), the PC 10_1 transmits setting instruction data (instructing the target device to set the parameters selected/designated on the pop-up screen) to the target device (S516), erases the pop-up screen (S518), and thereafter advances to step S150 of Fig. 5. The target device receiving the setting instruction data transmitted in S516 sets the parameters or updates parameters already set according to the setting instruction data.

If the operation by the user in S508 is the pressing of the "Cancel" button 284 or 294 (S514: NO, S520: YES), the PC 10_1 advances to step S518 without executing step S516.

If the operation by the user in S508 is none of the above operations (S520: NO), the PC 10_1 executes a process corresponding to the operation (other process) (S522) and thereafter returns to step S508.

Returning to Fig. 5, after finishing S518 of Fig. 5 or when the operation by the user in S140 is a selection/designation of a parameter (S148: NO, S150: YES), the PC 10_1 incorporates the selection/designation in the second screen (S152) and returns to step S140.

If the operation by the user in S140 is the pressing of the OK button 302 on the second screen (S150: NO, S154: YES), the PC 10_1 transmits setting instruction data (instructing the target device to set parameters which have been entered in input windows (boxes) on all the subscreens of the setting screen, excluding parameters selected/designated on the pop-up screen) to the target device (S156), erases the setting screen (S158), and thereafter returns to step S104 of Fig. 2. The target device receiving the setting instruction data transmitted in S156 sets the parameters or updates parameters already set according to the setting instruction data. The setting instruction data also has the purpose of informing the target device of the values of the "display format setting method variable", the "device display format variable" and the "device main protocol variable". The target device receiving the information sets the values of the variables as its own parameters by storing the values in the NVRAM 24. Incidentally, in each device, the parameter corresponding to the "device display format variable" is initially set to "Normal mode" (initial value).

If the operation by the user in S140 is the pressing of the "Cancel" button 304 on the second screen (S154: NO, S160: YES), the PC 10_1 advances to step S158 without executing step S156.

If the operation by the user in S140 is none of the above operations (S160: NO), the PC 10_1 executes a process corresponding to the operation (other process) (S162) and thereafter returns to step S140.

As described above, by the PC 10_1 in accordance with the first illustrative embodiment of the present invention, the following effects are achieved.

When a display format is selected by the user on the setting screen (second screen) in S140 of Fig. 5, the display mode of the setting screen displayed in S340 of Fig. 4 is switched to the selected display format. On the setting screen in each switched display format other than "Normal mode", not only parameters regarding the IP (IPv4 or IPv6) as the main protocol but also parameters regarding the IP (IPv6 or IPv4) as the sub protocol can be designated/entered. Therefore, the user can switch the display format at any time by performing the operation for selecting a display format on the setting screen (second screen) and can make settings of both parameters regarding IPv4 and parameters regarding IPv6 on the setting screen which is displayed in the switched display format.

Here, let us consider the shift of the network environment from IPv4-based environment to IPv6-based environment (i.e. the shift of the main protocol for realizing communication via a network from IPv4 to IPv6). As the shift of network environment progresses, the user can switch the display format from "Normal mode" to other display formats, by which the user is allowed to designate/set both parameters regarding IPv4 and parameters regarding IPv6 well adapting to the shift of network environment. When the network environment has totally shifted to IPv6-based environment, the user can prevent erroneous designation/setting of parameters regarding IPv4, by switching the main protocol to IPv6 and also switching the display format to "Normal mode".

The display format of the setting screen displayed in S340 of Fig. 4 is determined in step S308 or S328 based on the display mode checked in step S306 or S326. The display mode checked in step S306 or S326 is the value of the "display format variable" which has been set (or updated) in step S120 or S124 of Fig. 2, that is, registered/set both in the PC 10_1 and the target device. After the display format is switched by the user in S140 of Fig. 5, the displaying of the setting screen (second screen) is executed invariably according to the display format that has been set to the "display format variable" by the switching. Therefore, the user does not have to perform the operation for switching the display format on every displaying of a screen only for switching the display format from "Normal mode" to another display format.

Meanwhile, by selecting (designating) the IP as the main protocol in S204 of Fig. 3, the display mode of the setting screen (second screen) displayed in S340 of Fig. 4 can be switched to a display mode that regards the IP selected in S204 as the main protocol, that is, a display mode that places the area for making settings regarding the IP selected as the main protocol (second area) in the upper part of the screen. By such a display mode, the PC 10_1 can let the user designate parameters on the setting screen while giving high priority to the IP selected by the user in S204.

The display mode of the setting screen displayed in S340 of Fig. 4 is determined in the process from S304 or S324 based on the IP as the main protocol checked in step S302. The "IP as the main protocol" checked in step S302 is the value of the "main protocol variable" which has been set (or updated) in step S122 or S126 of Fig. 2, that is, registered/set both in the PC 10_1 and the target device. After the IP as the main protocol is selected in S204 of Fig. 3, displaying the setting screen (second screen) is executed invariably according to the value (IPv4 or IPv6) that has been set to the "main protocol variable" by the selection. Therefore, the user does not have to perform the operation for selecting the main protocol on every displaying of a screen only for selecting the main protocol for the setting screen.

In steps S140 - S158 of Fig. 5 and steps S508 - S518 of Fig. 7, the user can set parameters to the target device by designating a parameter from a list box, entering a parameter in a text box, etc.

In step S222 of Fig. 3, the notification data indicating the values of the "display format setting method variable" and the "device main protocol variable" (which have been set according to the selection status of the IP designation buttons 112 and 114 and the setting method designation buttons 122 and 124 on the ADS screen) is transmitted to the information source devices (devices from which the general information was obtained in S102 of Fig. 2), by which the values of the variables can be stored in the information source devices.

In step S156 of Fig. 5, the setting instruction data, containing the values of the "display format setting method variable", the "device display format variable", the "device main protocol variable", etc. which have been set so far, is transmitted to the target device, by which the values of the variables can be stored in the target device.

In each of steps S210, S212, S214 and S218 of Fig. 3, a value indicating the selection status of the IP designation buttons 112 and 114 or the setting method designation buttons 122 and 124 on the ADS screen is set to the "device main protocol variable", the "tool main protocol variable", the "main protocol variable" or the "display format setting method variable", by which the value of each variable can be stored in the PC 10_1.

Further, the user can select whether to store the value indicating the selection status of the IP designation buttons 112 and 114 on the ADS screen (operated in S204 of Fig. 3) in the PC 10_1 or in the information source devices, by selecting the setting method designation button 122 or 124 in S204 of Fig. 3.

Specifically, the value of the "device main protocol variable" sent to the information source devices in step S222 of Fig. 3, indicating the selection status of the IP designation buttons 112 and 114 on the ADS screen (operated in S204), is changed by step S210. The step S210 is executed only when the judgment of S208 is "YES" (i.e. when the "display format setting method variable" has been set to "device"). Therefore, by setting the "display format setting method variable" to "PC", the value of the "device main protocol variable" (to be sent to the information source devices in S222) remains the same, and consequently, the selection status of the IP designation buttons 112 and 114 (operated in S204) is not stored in the information source devices.

Therefore, the user can select whether the value indicating the selection status of the IP designation buttons 112 and 114 operated in S204 of Fig. 3 should be stored in the PC 10_1 or in the information source devices, by setting the "display format setting method variable" to "PC" or "device". Since the "display format setting method variable" is changed by step S218 according to the selection status of the setting method designation buttons 122 and 124, the user can select whether to store the value indicating the selection status of the IP designation buttons 112 and 114 (only) in the PC 10_1 or in the information source devices, by selecting the setting method designation button 122 or 124 in step S204 of Fig. 3.

Meanwhile, the value of the "device display format variable" sent to the target device in step S156 of Fig. 5, indicating the display format designated by the user on the setting screen (second screen) in step S140 of Fig. 5, is changed by step S410 of Fig. 6. The step S410 is executed only when the judgment of S408 is "YES" (i.e. when the "display format setting method variable" has been set to "device"). Therefore, by setting the "display format setting method variable" to "PC", the value of the "device display format variable" (to be sent to the target device in S156) remains the same, and consequently, the display format designated in step S140 is not stored in the target device.

Therefore, the user can select whether the value indicating the display format designated in step S140 of Fig. 5 should be stored in the PC 10_1 or in the target device, by setting the "display format setting method variable" to "PC" or "device". Since the "display format setting method variable" is changed by step S218 according to the selection status of the setting method designation buttons 122 and 124, the user can select whether to store the value indicating the display format designated in step S140 (only) in the PC 10_1 or in the target device, by selecting the setting method designation button 122 or 124 in step S204 of Fig. 3.

### Embodiment 2

In a second illustrative embodiment described below, the PC 10_1 inquires also about the IP mode of the target device (indicating whether the target device has been configured to realize communication according to IPv4 only, IPv6 only, or both IPv4 and IPv6 (Dual)) together with the display information in step S116 of Fig. 2, and executes steps explained below before step S302 of Fig. 4 and after step S340 of Fig. 4 (after displaying the setting screen). Since other steps are identical with those of the first illustrative embodiment, only the extra steps will be explained below.

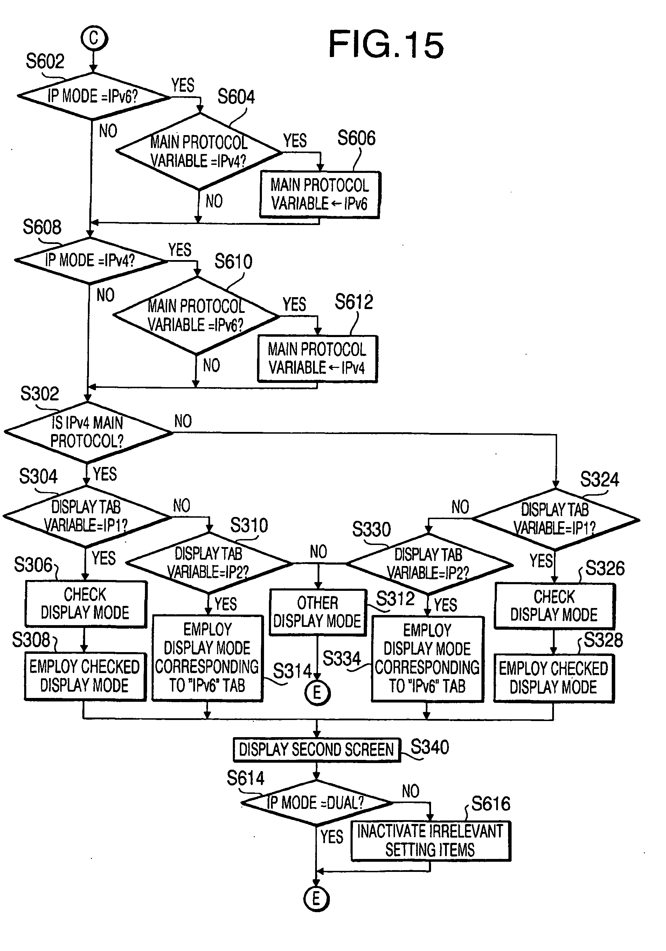

After finishing step S128 of Fig. 2, the PC 10_1 advances to a process shown in Fig. 15. If the IP mode of the target device obtained in response to the inquiry of S116 of Fig. 2 is "IPv6" (S602: YES), the PC 10_1 checks whether the "main protocol variable" has been set to "IPv4" (S604). If the "main protocol variable" is "IPv4" (S604: YES), the PC 10_1 sets the "main protocol variable" to "IPv6" (S606) and advances to the next step S608. If the "main protocol variable" is "IPv6" (S604: NO), the PC 10_1 advances to step S608 without executing step S606. As above, when the "main protocol variable" has been set to "IPv4" when the IP mode of the target device is "IPv6", the "main protocol variable" is corrected to "IPv6" in steps S602 - S606.

If the IP mode obtained in response to the inquiry of S116 is "IPv4" (S602: NO, S608: YES), the PC 10_1 checks whether the "main protocol variable" has been set to "IPv6" (S610). If the "main protocol variable" is "IPv6" (S610: YES), the PC 10_1 sets the "main - protocol variable" to "IPv4" (S612) and advances to step S302. If the "main protocol variable" is "IPv4" (S610: NO), the PC 10_1 advances to step S302 without executing step S612. As above, when the "main protocol variable" has been set to "IPv6" when the IP mode of the target device is "IPv4", the "main protocol variable" is corrected to "IPv4" in steps S608 - S612.

If the IP mode obtained in response to the inquiry of S116 is neither "IPv6" nor "IPv4", that is, "Dual" (S602: NO, S608: NO), the PC 10_1 advances to step S302 skipping steps S604, S606, S610 and S612.

After displaying the setting screen (second screen) in step S340, if the IP mode obtained in response to the inquiry of S116 is not "Dual" (S614: NO), the PC 10_1 switches setting items on the setting screen (boxes, buttons, etc.) irrelevant to the IP mode of the target device to an invariable state (S616) and thereafter advances to step S140 of Fig. 5. On the other hand, if the IP mode obtained in response to the inquiry of S116 is "Dual" (S614: YES), the PC 10_1 advances to step S140 of Fig. 5 without executing step S616. In step S616, setting items (boxes, buttons, etc.) irrelevant to the IP mode of the target device (i.e. setting items regarding IPv6 when the IP mode is IPv4, or setting items regarding IPv4 when the IP mode is IPv6) are inactivated (disabled) so that the user can not perform setting operations regarding such setting items on the setting screen. Specifically, when the IP mode of the target device is IPv4, text boxes, list boxes and buttons in the third or second area for making settings regarding IPv6 are inactivated so that the user can not perform setting operations regarding such setting items on the setting screen. On the other hand, when the IP mode of the target device is IPv6, text boxes, list boxes and buttons in the second or third area for making settings regarding IPv4 are inactivated so that the user can not perform setting operations regarding such setting items on the setting screen. Here, "to inactivate" means, for example, to gray out the irrelevant setting items to let the user recognize the setting items do not allow for setting operations (that is, the setting items are inactive).

While setting items irrelevant to the IP mode of the target device are inactivated in the above example, it is also possible to hide the irrelevant setting items (leave out the displaying of the irrelevant setting items). In such cases, on the setting screen in the display format "Another tab" (having two IP tabs), the "IPv4" tab 402 or the "IPv6" tab 404 irrelevant to the IP mode may also be hidden.

As described above, by the PC 10_1 in accordance with the second illustrative embodiment of the present invention, the following effect is achieved in addition to the effects of the first illustrative embodiment.

In step S616 of Fig. 15, setting items irrelevant to the IP mode of the target device can be switched to an invariable state. Therefore, when the target device has been configured to realize communication according to only one IP (IPv4 or IPv6), the display mode of the setting screen is switched so that parameters regarding an IP incapable of realizing communication can not be designated/set by the user on the screen. Since it becomes impossible to perform operations for setting irrelevant parameters (regarding the IP incapable of realizing communication) to the target device, improper setting instructions, instructing the target device to set such irrelevant parameters, can be prevented.

### Embodiment 3

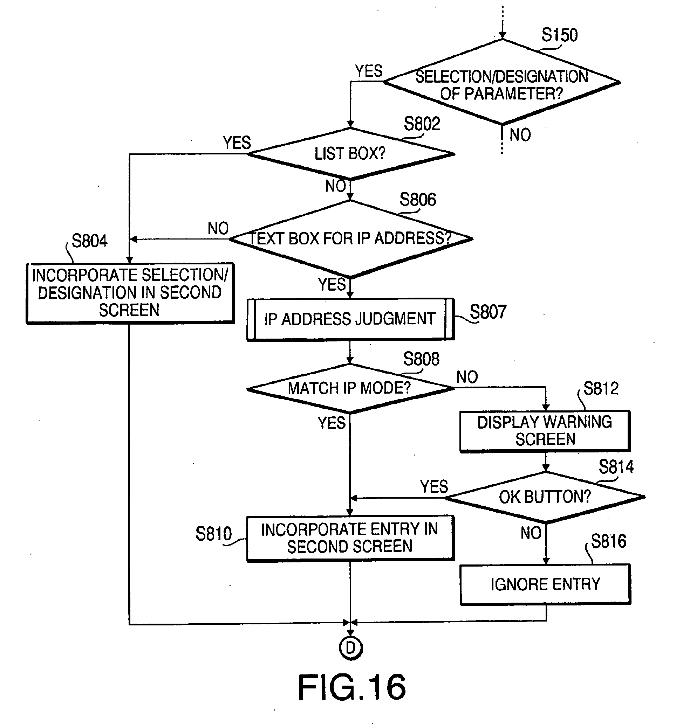

In a third illustrative embodiment described below, a process shown in Fig. 16 is executed instead of step S152 of Fig. 5. Since other steps are identical with those of the first illustrative embodiment, only the process of Fig. 16 will be explained below.

Referring to Fig. 16, when the operation by the user in S140 is a selection/designation of a parameter (S150: YES), if the operation is a selection of a parameter from a list box (S802: YES), the PC 10_1 incorporates the selection in the second screen similarly to S152 of Fig. 5 (S804) and thereafter returns to step S140 of Fig. 5.

If the operation is the designation of a parameter by entering a character string in a text box (S802: NO), the PC 10_1 checks whether the text box is one for designating an IP address (S806).

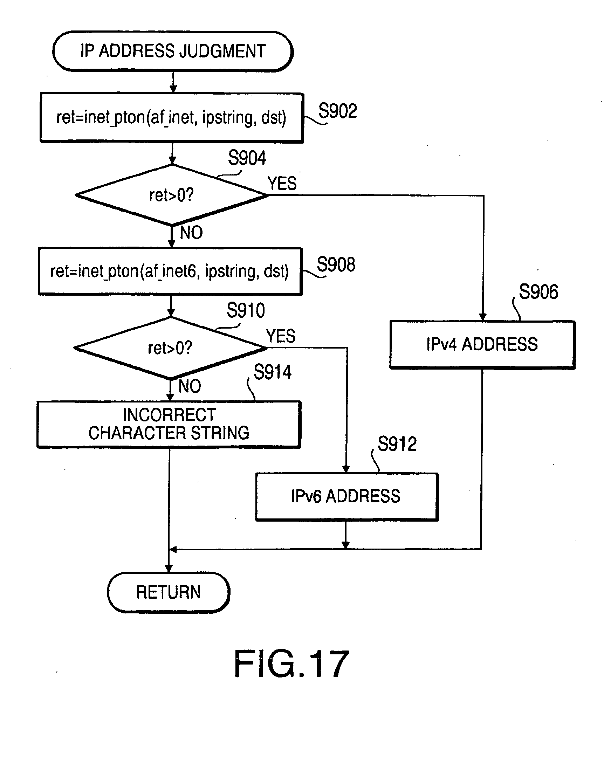

If the text box is not one for designating an IP address (S806: NO), the PC 10_1 advances to step S804. If the text box is one for designating an IP address (S806: YES), the PC 10_1 makes a judgment on the IP address (the character string entered in the text box) by executing a functional process shown in Fig. 17 by use of standard functions (S807).

Specifically, as shown in Fig. 17, the PC 10_1 calculates a function "ret = inet_pton (af_inet, ipstring, dst)" by substituting the character string entered in the text box into the variable "ipstring" (S902). The function returns a "negative" value when the "ipstring" is not a character string representing an IP address in the IPv4 format, while returning a "positive" value when the "ipstring" is a character string representing an IP address in the IPv4 format (a correct character string). Therefore, when a "positive" value is returned by the function, it means that the character string entered in the text box is an IPv4 address.

If the return value of the function calculated in S902 is positive (S904: YES), the PC 10_1 judges that the character string entered in the text box is an IPv4 address (S906).

On the other hand, if the return value of the function calculated in S902 is negative (S904: NO), the PC 10_1 calculates a function "ret = inet_pton (af_inet6, ipstring, dst)" by substituting the character string entered in the text box into the variable "ipstring" (S908). The function returns a "negative" value when the "ipstring" is not a character string representing an IP address in the IPv6 format, while returning a "positive" value when the "ipstring" is a character string representing an IP address in the IPv6 format (a correct character string). Therefore, when a "positive" value is returned by the function, it means that the character string entered in the text box is an IPv6 address.

If the return value of the function calculated in S908 is positive (S910: YES), the PC 10_1 judges that the character string entered in the text box is an IPv6 address (S912).

On the other hand, if the return value of the function calculated in S908 is negative (S910: NO), the PC 10_1 judges that the character string entered in the text box is an incorrect character string (S914). After making the judgment on the character string entered in the text box by executing the functional process of Fig. 17, the PC 10_1 checks whether the format (IPv4 or IPv6) of the IP address judged by the functional process matches the IP mode of the target device (S808). In this step, the check is carried out based on the IP mode of the target device indicated by the setting data returned from the target device in response to the inquiry of S128 of Fig. 2. Specifically, when the IP address judged by the functional process is an IPv4 address, the PC 10_1 judges that the format of the IP address matches the IP mode of the target device if the IP mode is "IPv4" or "Dual". On the other hand, when the IP address is an IPv6 address, the PC 10_1 judges that the format matches the IP mode of the target device if the IP mode is "IPv6" of "Dual".

If the format of the IP address is judged to match the IP mode of the target device (S808: YES), the PC 10_1 incorporates the IP address (the entry in the text box in S140 of Fig. 5) in the second screen (S810) and thereafter returns to step S140 of Fig. 5.

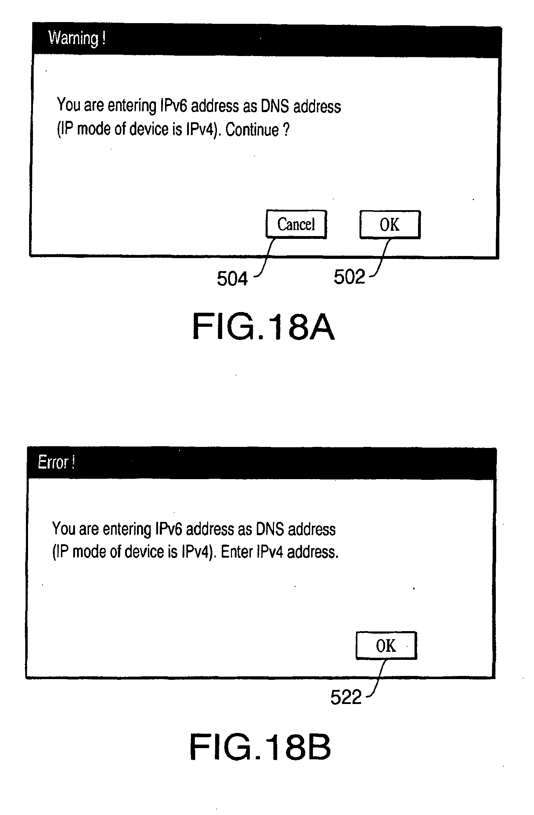

If the format of the IP address is judged not to match the IP mode of the target device (S808: NO), the PC 10_1 displays a warning screen like the one shown in Fig. 18A on the display unit 17 (S812). The warning screen includes an OK button 502 for instructing the PC 10_1 to incorporate the IP address (the entry in the text box in S140 of Fig. 5) in the second screen and a "Cancel" button 504 for restoring the text box to the original (blank) state. After the warning screen has been displayed as above, the user can perform an operation for selecting the button 502 or 504.

After displaying the warning screen, the PC 10_1 waits for an operation by the user. When the OK button 502 is pressed by the user (S814: YES), the PC 10_1 advances to step S810 to incorporate the IP address in the second screen. When the "Cancel" button 504 is pressed by the user (S814: NO), the PC 10_1 advances to step S 140 without incorporating the IP address in the second screen (S816).

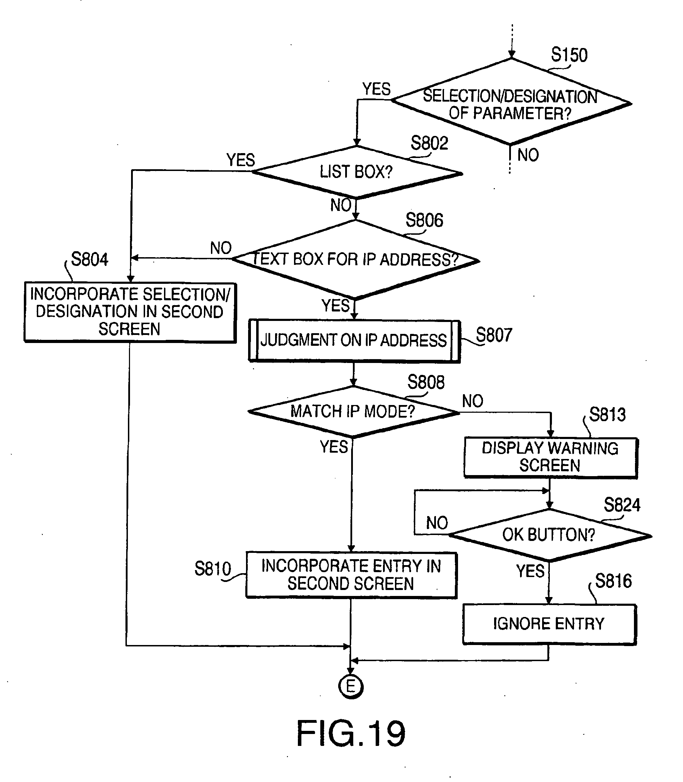

While the warning screen of Fig. 18A is displayed when the IP address format is judged not to match the IP mode of the target device (S808: NO) and the entry in the text box is incorporated in the second screen via a confirmation operation by the user (pressing the OK button 502) in this illustrative embodiment, the PC 10_1 may also display a warning screen of a different type. Referring to Fig. 19, when the IP address format does not match the IP mode (S808: NO), the PC 10_1 displays a warning screen like the one shown in Fig. 18B on the display unit 17 (S813). The PC 10_1 waits until an OK button 522 on the warning screen is pressed by the user (S824: NO), and advances to step S816 when the OK button 522 is pressed (S824: YES).

As described above, by the PC 10_1 in accordance with the third illustrative embodiment of the present invention, the following effects are achieved in addition to the effects of the first illustrative embodiment.

When the IP mode of the target device (in cases where a display format other than "Normal mode" has been selected in S140 of Fig. 5, for example) does not match the IP mode (version) of the IP address entered in a text box for designating an IP address, the mismatch can be reported to the user by the warning screen.

In the example of Fig. 19 in which the warning screen of Fig. 18B is displayed (S813) when the judgment of S808 is "NO", when the IP mode of the target device (in cases where a display format other than "Normal mode" has been selected by the user in S140 of Fig. 5, for example) does not match the IP mode of the IP address entered in a text box for an IP address, the IP address is not incorporated in the second screen, by which the designation of parameters (IP addresses) can be restricted. Since the designation of parameters (IP addresses) are blocked when the IP modes do not match, improper setting instructions, instructing the target device to set parameters regarding an IP with which the target device can not realize communication, can be prevented.

While a description has been given above of illustrative embodiments and aspects in accordance with the present invention, the present invention is not to be restricted by the particular illustrative embodiments or aspects and a variety of modifications, design changes, etc. are possible without departing from the scope and spirit of the present invention described in the appended claims.

For example, while the setting management program is executed by a PC (PC 10_1) in the above illustrative embodiments and aspects, devices executing the setting management program are not restricted to PCs. The setting management program may also be executed by scanners, network cameras, facsimile machines, network storage devices, audio-visual equipment, MFPs (Multi Function Peripherals), etc.

While IPv4 and IPv6 have been taken as examples of communication standards (protocols) in the above illustrative embodiments and aspects, of course the present invention is also applicable to other communication standards or protocols available in the future.

While the display mode of the setting screen for designating parameters is switched on the condition (switching condition) that the operation regarding step S142 of Fig. 5 (selection of a display format) is performed by the user, any condition can be employed as the switching condition. For example, the switching condition may be set so as to be satisfied when the date/time has reached a prescribed date/time. When the IP mode of data circulating on the network (whether the data is according to IPv4 or IPv6) can be monitored based on the source/destination address of the data, the decoding type of DNS server response, etc., the switching condition may be set to be satisfied when the abundance ratio of data according to a particular IP exceeds a prescribed ratio. In these cases, it is desirable that the switching condition be set so that it will be satisfied during (concurrently with) the aforementioned transitional period.

While the display mode of the setting screen (second screen) is switched depending on which IP has been designated as the main IP (IP as the main protocol) and the switched display mode arranges items regarding the main IP in the upper part of the screen in the above illustrative embodiments, the setting screen may also employ a display mode that arranges only the items regarding the main IP on the screen.

While step S807 of Fig. 16 judges whether a character string entered in a text box for designating an IP address is a character string representing an IP address in the IPv4 - format, a character string representing an IP address in the IPv6 format or an incorrect character string in the third illustrative embodiment, it is also possible to configure the PC 10_1 to allow the user to enter a character string representing the device name of a server (to which the IP address has been assigned) in the text box instead of the character string representing the IP address, and execute the process from S808 based on the device name.

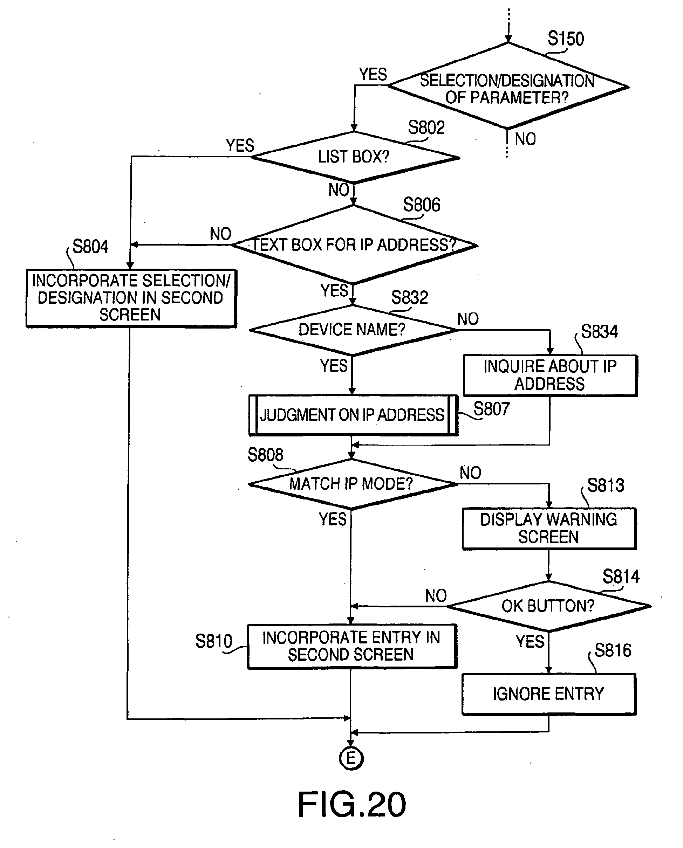

Specifically, as shown in Fig. 20, when the judgment of step S806 of Fig. 16 is "YES", that is, when the text box is one for designating an IP address, the PC 10_1 checks whether the character string entered in the text box is one representing a device name (S832). In this step, the character string is judged to represent a device name when a character (letter, symbol, etc.) that is not used for an IP address is included in the character string. Incidentally, is also possible to provide the second screen with a special-purpose text box for designating a device name, instead of allowing the user to enter a character string representing a device name in the text box for designating an IP address.

If the character string is not judged to represent a device name (S832: NO), the PC 10_1 advances to step S807. If the character string is judged to represent a device name (S832: YES), the PC 10_1 inquires of a DNS server 50 about an IP address assigned to the device having the device name (S834) and thereafter advances to step S808. In step S834, the PC 10_1 inquires of the DNS server 50 about an "A record" (describing an IPv4 address) and an "AAAA record" (describing an IPv6 address) out of records describing IP addresses assigned to the device having the device name entered in the text box. The DNS server 50 receiving the inquiry returns an IPv4 address described in the "A record" (when the "A record" regarding the device has been registered) or an IPv6 address described in the "AAAA record" (when the "AAAA record" regarding the device has been registered). When both the "A record" and the "AAAA record" regarding the device have been registered, the DNS server 50 returns both the IPv4 address and IPv6 address.

In the case where the PC 10_1 advances to step S808 via S834, the PC 10_1 checks whether the format of the IP address returned from the DNS server 50 in S834 matches the IP mode of the target device. Specifically, when an IPv4 address is returned from the DNS server 50 in S834, the PC 10_1 judges that the IP address format matches the IP mode of the target device (S808: YES) if the IP mode of the setting target device indicated by the aforementioned setting data is "IPv4" or "Dual". When an IPv6 address is returned from the DNS server 50 in S834, the PC 10_1 judges that the IP address format matches the IP mode of the target device (S808: YES) if the IP mode of the target device indicated by the setting data is "IPv6" or "Dual".

While the setting screen (second screen) is displayed in step S340 of Fig. 5 in a display mode determined in step S308 or S328 of Fig. 4 irrespective of the IP mode of the target device in the above illustrative embodiment, it is also possible to configure the PC 10_1 to check the IP mode of the target device before displaying the setting screen in S340 and carry out the displaying of the setting screen (i.e. the switching of the display format) in S340 only when the setting screen is going to be displayed in a display format that matches the IP mode of the target device.

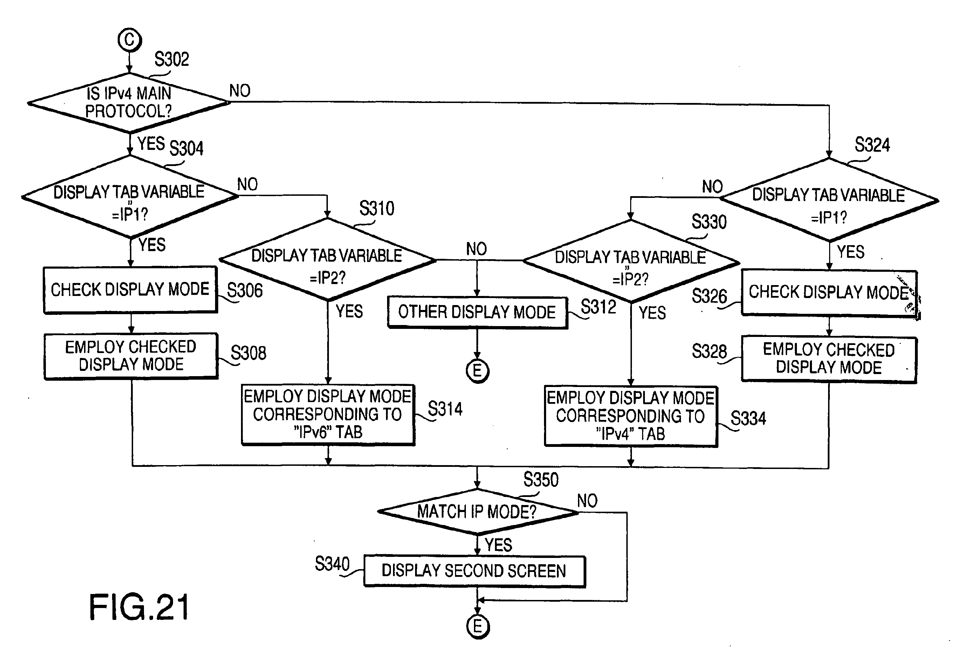

Specifically, the PC 10_1 in S116 of Fig. 2 inquires of the target device also about its IP mode. As shown in Fig. 21, before step S340, the PC 10_1 checks whether the display mode determined in steps S302 - S334 matches the IP mode of the target device (S350). If the display mode matches the IP mode (S350: YES), the PC 10_1 advances to step S340. If the display mode does not match the IP mode (S350: NO), the PC 10_1 advances to step S140 of Fig. 5 without executing step S340. In this case, the mismatch may be reported to the user by displaying a warning screen, etc. In step S350, when the IP mode of the target device (obtained in response to the inquiry of S116 of Fig. 2) is not "Dual" and the display mode determined in step S308 or S328 is other than "Normal mode", the user can be improperly allowed to designate/set parameters regarding the IP as the sub protocol of the target device although setting such parameters to the target device is impossible (unnecessary). To avoid the improper designation/setting of parameters, the display mode determined in step S308 or S328 (for mode switching) is judged not to match the IP mode of the target device (S350: NO) in the above case.

According to the above-described illustrative embodiments, the PC 10_1 is equipped with the setting management program, by which the CPU 11 of the PC 10_1 executes various windows regarding the setting of the printer 20 on the display unit of the PC 20. Then, in response to operation of the operation unit 18, corresponding operations are executed. It should be noted that such a configuration is an exemplary configuration, and can be modified in various ways. For example, the setting management program may be installed in the printer 20, which may cause the CPU 21 of the printer 20 to operate to display various windows regarding the setting of the printer 20 on an LCD or an external monitor (not shown) provided to the printer 20. In such a case, the user I/F 27 may be used as an operation unit, and, in response to operation of the user I/F 27, corresponding operations may be executed.

Alternatively, the printer 20 may store the setting management program. Further, the printer 20 may include a Web server (not shown), and PC 10 may be provided with a Web browser (not shown). In such a configuration, the Web browser, the network I/F 16 and 26, and the Web server function as a communication interface between the setting management program and the display unit 17, and between the setting management program and the operation unit 18. Then, in response to operation of the operation unit 18 by the user, corresponding operation is executed in accordance with processes defined by the setting management program.

## Claims

1. A computer program product comprising computer-readable instructions that cause a computer (10.1) to perform a setting management process comprising the steps of:
allowing a user to designate a parameter to be set to a target device (20), the parameter at least one of enabling communication according to a respective communication standard and enabling other devices (10) to use a function of the target device (20) via a network and enabling the target device to use a function of another device (10) via the network;
instructing the target device (20) via the network to set the designated parameter; and
in response to a switching condition being satisfied, switching a designation mode to one of a first mode and a second mode, the designation mode being a display mode allowing the user to designate the parameter to be set on a screen image corresponding to the display mode, the first mode which allows the user to designate either a first parameter according to a first communication standard or a second parameter according to a second communication standard different from the first communication standard, and the second mode which allows the user to designate both the first parameter and the second parameter, wherein one of the first parameter and the second parameter is assigned higher priority than the other.

2. The computer program product according to claim 1, wherein the first communication standard and the second communication standard are different versions of the same communication standard.

3. The computer program product according to claim 2, wherein the first communication standard and the second communication standard are IPv4 and IPv6, respectively.

4. The computer program product according to claim 1, 2 or 3, wherein the switching step judges that the switching condition is satisfied and switches the designation mode in response to an operation being performed through an input unit of the computer (10.1).

5. The computer program product according to any preceding claim, wherein the switching step switches the designation mode by updating designation mode information registered in a prescribed storage area.

6. The computer program product according to any preceding claim wherein:
the setting management process further comprises the step of allowing a user to designate one of the first and second communication standards to be assigned higher priority in the second mode, and
wherein in the second mode the step of allowing the user to designate the parameter to be set allows the user to designate the parameter which one of the first or second parameter is assigned higher priority than the other of the first or second parameters.

7. The computer program product according to any preceding claim wherein:
the step of allowing a user to designate the parameter to be set to the target device (20) includes displaying a setting screen, the setting screen having at least an input window that allows the user to perform an operation for entering the parameter through an input unit of the computer (10.1), and
the step of instructing includes instructing the target device (20) to set the parameter entered in the input window of the setting screen, and
the step of switching the designation mode switches a display mode of the setting screen to one of the first and second modes when the switching condition is satisfied.

8. The computer program product according to claim 7, wherein the setting management process further comprises the step of allowing a user to selectively designate one of a plurality of types of setting screens as the setting screen displayed in the second mode in the step of allowing a user to designate the parameter to be set to the target device (20).

9. The computer program product according to any preceding claim, wherein:
the setting management process further comprises the step of checking whether the target device (20) is capable of using the function according to the first communication standard and the second communication standard, and
wherein the step of switching the designation mode switches the designation mode to the second mode only when the step of checking judges that the target device is capable of using the function according to both the first communication standard and the second communication standard.

10. The computer program product according to any preceding claim, wherein:
the setting management process further comprises the step of checking whether the target device (20) is capable of using the function according to the first communication standard and the second communication standard, and
when the step of checking judges that the target device is capable of using the function according to both the first communication standard and the second communication standard, the step of switching the designation mode switches the designation mode to the second mode, and
when the step of checking judges that the target device is not capable of using the function according to both the first communication standard and the second communication standard, the step of switching the designation mode switches the designation mode to a mode that prohibits the user from designating parameters regarding a communication standard with which the target device is not capable of using the function.

11. The computer program product according to any preceding claim, wherein the setting management process further comprises the steps of:
a checking whether the target device (20) is capable of communication according to each of the first and second communication standards; and
reporting a mismatch to the user when the designation mode does not match communication standards judged by the step of checking to be capable of communication by the target device (20).

12. The computer program product according to any preceding claim, wherein the setting management process further comprises the steps of:
checking whether the target device is capable of communication according to each of the first and second communication standards; and
restricting the designation of the parameter in when the designation mode switched to does not match communication standards judged by the step of checking to be capable of communication by the target device (20).

13. The computer program product according to any preceding claim, the computer being in a management device (10.1), capable of communicating with the target device (20) via a network.

14. The computer program product according to any one of claims 6 to 13, wherein the setting management process further comprises the step of storing the a setting of the designated parameter made in the step of allowing the user to designate the one of the first and second communication standards in a storage unit of the computer (10.1).

15. The computer program product according to any one of claims 6 to 14, wherein the setting management process further comprises the step of storing a setting of the designated parameter made in the step of allowing the user to designate the one of the first and second communication standards in a storage unit of the target device (20).

16. The computer program product according to any one of claims 6 to 15, wherein the setting management process further comprises the steps of:
allowing a user to select whether to store a setting of the designated parameter made in the step of allowing the user to designate the one of the first and second communication standards in a storage unit of the computer or in a storage unit of the target device; and
storing the setting in the selected storage unit.

17. The computer program product according to any one of claims 8 to 16, wherein the setting management process further comprises the step of storing at least one of a setting of the designation mode, a setting of the type of setting screen selectively designated and the designation mode when the setting management process is ended, in a storage unit of the computer (10.1).

18. The computer program product according to any one of claims 8 to 17, wherein the setting management process further comprises the step of storing at least one of a setting of the designation mode, a setting of the type of setting screen selectively designated and the designation mode when the setting management process is ended, in a storage unit of the target device (20).

19. The computer program product according to any one of claims 8 to 18, wherein the setting management process further comprises the steps of:
allowing a user to select whether if at least one of a setting of the designation mode, a setting of the type of setting screen selectively designated and the designation mode when the setting management process is ended, is to be stored in a storage unit of the computer or in a storage unit of the target device; and
storing at least one of the setting of the designation mode, the setting of the type of setting screen selectively designated and the designation mode when the setting management process is ended, in the selected storage unit.

20. The computer program product according to any preceding claim, wherein the setting management process further comprises the steps of:
checking whether a communication standard corresponding to the parameter designated by the user matches an IP mode of the target device (20); and
reporting a mismatch to the user when the communication standard corresponding to the parameter designated by the user is judged by the step of checking not to match the IP mode of the target device (20).

21. An apparatus (10.1) configured to manage settings of parameters of a target device (20) which is connected to the apparatus via a network, comprising:
a parameter designation unit for allowing a user to designate a parameter to be set to the target device, the parameter enabling communication according to a respective communication standard and at least one of enabling other devices to use a function of the target device (20) via the network and enabling the target device to use a function of another H device (10) via the network;
a parameter setting instruction unit for instructing the target device (20) via the network to set the parameter designated by the user; and
a mode switching unit (112, 114) which, in response to a switching condition being satisfied, is arranged to switch a designation mode to one of a first and a second mode, the designation mode being a display mode allowing the user to designate the parameter to be set on a screen image corresponding to the display mode, the first mode allowing the user to designate either a first parameter according to a first communication standard or a second parameter according to a second communication standard different from the first communication standard, and the second mode which allows the user to designate both the first parameter and the second parameter, wherein one of the first parameters or the second parameters is assigned higher priority than the other.

22. A setting management system comprising:
a target device (20) to which parameters can be set via a network; and
the apparatus (10.1) of claim 21 connected to the target device (20) via the network for managing settings of the parameters of the target device.

23. A setting management method for a management device (10.1) capable of communicating with a target device (20) via a network, comprising:
allowing a user to designate a parameter to be set of the target device, the parameter enabling communication according to a respective communication standard and at least one of enabling other devices (10) to use a function of the target device (20) via the network and enabling the target device (20) to use a function of another device (10) via the network;
instructing the target device (20) via the network to set the designated parameter; and
in response to a switching condition being satisfied, switching a designation mode to one of a first mode and a second mode, the designation mode being a display mode allowing the user to designate the parameter to be set on a screen image corresponding to the display mode, the first mode which allows the user to designate either a first parameter according to a first communication standard or a second parameter according to a second communication standard different from the first communication standard, and the second mode which allows the user to designate both the first parameter and the second parameter, wherein one of the first usage parameter or the second usage parameter is assigned higher priority than the other.

## Patentansprüche

1. Computerprogrammprodukt, das von einem Rechner lesbare Anweisungen umfasst, die einen Rechner (10.1) zur Ausführung eines Ablaufs zur Verwaltung von Einstellungen veranlasst, welcher die folgenden Schritte umfasst:
einem Benutzer die Möglichkeit zur Bestimmung eines auf eine Zielvorrichtung (20) zu setzenden Parameters geben, wobei der mindestens eine der Parameter die Kommunikation entsprechend einem jeweiligen Kommunikationsstandard freigibt und andere Vorrichtungen (10) in die Lage versetzt, eine Funktion der Zielvorrichtung (20) über ein Netzwerk (2) zu nutzen, und die Zielvorrichtung in die Lage versetzt, eine Funktion einer anderen Vorrichtung (10) über das Netzwerk zu verwenden;
Anweisen der Zielvorrichtung (20) über das Netzwerk, den bestimmten Parameter zu setzen; und
im Ansprechen auf die Erfüllung einer Umschaltbedingung einen Bestimmungsmodus in einen Modus aus einem ersten und einem zweiten Modus zu schalten, wobei es sich bei dem Bestimmungsmodus um einen Anzeigemodus handelt, welcher dem Benutzer die Möglichkeit gibt, den zu setzenden Parameter auf einer dem Anzeigemodus entsprechenden Bildschirmabbildung zu setzen, der erste Modus es dem Benutzer ermöglicht, entweder einen ersten Parameter entsprechend einem ersten Kommunikationsstandard oder einen zweiten Parameter entsprechend einem zweiten Kommunikationsstandard zu bestimmen, der sich von dem ersten Kommunikationsstandard unterscheidet, und der zweite Modus es dem Benutzer ermöglicht, sowohl den ersten Parameter als auch den zweiten Parameter zu bestimmen, wobei dem ersten Nutzungsparameter oder dem zweiten Nutzungsparameter eine höhere Priorität als dem jeweils anderen Parameter zugewiesen wird.

2. Computerprogrammprodukt nach Anspruch 1, bei welchem der erste Kommunikationsstandard und der zweite Kommunikationsstandard unterschiedliche Versionen des gleichen Kommunikationsstandards darstellen.

3. Computerprogrammprodukt nach Anspruch 2, bei welchem es sich bei dem ersten Kommunikationsstandard und bei dem zweiten Kommunikationsstandard jeweils um den Standard IPv4 bzw. IPv6 handelt.

4. Computerprogrammprodukt nach Anspruch 1, 2 oder 3, bei welchem bei dem Schritt zur Umschaltung entschieden wird, ob die Umschaltbedingung erfüllt ist, und im Ansprechen auf einen Vorgang, der über eine Eingabeeinheit des Rechners (10.1) gerade durchgeführt wird, der Bestimmungsmodus umgeschaltet wird.

5. Computerprogrammprodukt nach einem der vorhergehenden Ansprüche, bei welchem in dem Schritt zur Umschaltung der Bestimmungsmodus **dadurch** umgeschaltet wird, dass eine Information zum Bestimmungsmodus, die in einem vorgeschriebenen Speicherbereich erfasst ist, aktualisiert wird.

6. Computerprogrammprodukt nach einem der vorhergehenden Ansprüche, bei welchem
der Ablauf zur Verwaltung von Einstellungen des Weiteren den Schritt umfasst, in dem einem Benutzer die Möglichkeit gegeben wird, den ersten oder den zweiten Kommunikationsstandard zu bestimmen, dem im zweiten Modus eine höhere Priorität zuzuweisen ist, und
bei dem in dem zweiten Modus der Schritt, mit dem es dem Benutzer ermöglicht wird, den zu setzenden Parameter zu bestimmen, dem Benutzer die Möglichkeit gegeben wird, den Parameter unter dem ersten oder zweiten Parameter zu bestimmen, dem eine höhere Priorität als dem jeweils anderen zweiten oder ersten Parameter zugewiesen wird.

7. Computerprogrammprodukt nach einem der vorhergehenden Ansprüche, bei welchem
der Schritt, der es dem Benutzer ermöglicht, den auf die Zielvorrichtung (20) zu setzenden Parameter zu bestimmen, die Anzeige eines Setzbildschirms umfasst, wobei der Setzbildschirm mindestens ein Eingabefenster aufweist, das dem Benutzer die Möglichkeit gibt, einen Arbeitsgang zur Eingabe des Parameters über eine Eingabeeinheit des Rechners (10.1) vorzunehmen, und
der Schritt zur Anweisung auch das Anweisen der Zielvorrichtung (20) umfasst, den im Eingabefenster des Eingabebildschirms eingegebenen Parameter zu setzen; und
der Schritt zum Umschalten des Bestimmungsmodus einen Anzeigemodus des Setzbildschirms auf den ersten oder zweiten Modus schaltet, wenn die Umschaltbedingung erfüllt ist.

8. Computerprogrammprodukt nach Anspruch 7, bei welchem der Ablauf zur Verwaltung von Einstellungen außerdem den Schritt umfasst, der einem Benutzer die Möglichkeit gibt, selektiv einen Setzbildschirm aus einer Vielzahl von Bildschirmarten als Setzbildschirm zu bestimmen, der in dem zweiten Modus bei dem Schritt angezeigt wird, der einem Benutzer die Möglichkeit gibt, den auf die Zielvorrichtung (20) zu setzenden Parameter zu bestimmen.

9. Computerprogrammprodukt nach einem der vorhergehenden Ansprüche, bei welchem
der Ablauf zur Verwaltung von Einstellungen des Weiteren den Schritt umfasst, bei dem geprüft wird, ob die Zielvorrichtung (20) in der Lage ist, die Funktion entsprechend dem ersten Kommunikationsstandard und dem zweiten Kommunikationsstandard zu verwenden, und
bei welchem der Schritt zum Umschalten des Bestimmungsmodus den Bestimmungsmodus auf den zweiten Modus nur dann umschaltet, wenn bei dem Prüfschritt entschieden wird, dass die Zielvorrichtung in der Lage ist, die Funktion entsprechend dem ersten Kommunikationsstandard und dem zweiten Kommunikationsstandard zu verwenden.

10. Computerprogrammprodukt nach einem der vorhergehenden Ansprüche, bei welchem
der Ablauf zur Verwaltung von Einstellungen außerdem den Schritt zur Prüfung umfasst, ob die Zielvorrichtung (20) in der Lage ist, die Funktion entsprechend dem ersten Kommunikationsstandard und dem zweiten Kommunikationsstandard zu verwenden, und
dann, wenn in dem Prüfschritt entschieden wird, dass die Zielvorrichtung in der Lage ist, die Funktion entsprechend dem ersten Kommunikationsstandard und dem zweiten Kommunikationsstandard zu verwenden, der Schritt zum Umschalten des Bestimmungsmodus den Bestimmungsmodus auf den zweiten Modus umschaltet, und
dann, wenn in dem Prüfschritt entschieden wird, dass die Zielvorrichtung nicht in der Lage ist, die Funktion entsprechend dem ersten Kommunikationsstandard und dem zweiten Kommunikationsstandard zu verwenden, der Schritt zum Umschalten des Bestimmungsmodus den Bestimmungsmodus auf einen Modus umschaltet, welcher verhindert, dass der Benutzer Parameter im Zusammenhang mit einem Kommunikationsstandard bestimmt, bei dem die Zielvorrichtung nicht in der Lage ist, die Funktion zu verwenden.

11. Computerprogrammprodukt nach einem der vorhergehenden Ansprüche, bei welchem der Ablauf zur Verwaltung von Einstellungen des Weiteren die folgenden Schritte umfasst:
eine Prüfung darauf, ob die Zielvorrichtung (20) zur Kommunikation jeweils nach dem ersten und dem zweiten Kommunikationsstandard in der Lage ist, und
Melden eines Anpassungsfehlers an den Benutzer, wenn der Bestimmungsmodus nicht mit den Kommunikationsstandards zusammenpasst, die in dem Schritt zur Prüfung beurteilt wurden, ob die Zielvorrichtung (20) zur Kommunikation in der Lage ist.

12. Computerprogrammprodukt nach einem der vorhergehenden Ansprüche, bei welchem der Ablauf zur Verwaltung von Einstellungen des Weiteren die folgenden Schritte umfasst:
eine Prüfung darauf, ob die Zielvorrichtung zur Kommunikation entsprechend jeweils dem ersten und zweiten Kommunikationsstandard in der Lage ist, und
Einschränken der Bestimmung des Parameters, wenn der geschaltete Bestimmungsmodus nicht mit den Kommunikationsstandards zusammenpasst, die in dem Schritt zur Prüfung, ob die Zielvorrichtung (20) zur Kommunikation in der Lage ist, beurteilt wurden.

13. Computerprogrammprodukt nach einem der vorhergehenden Ansprüche, bei welchem der Rechner, der in einer Verwaltungsvorrichtung (10.1) vorhanden ist, zur Kommunikation mit der Zielvorrichtung (20) über ein Netzwerk in der Lage ist.

14. Computerprogrammprodukt nach einem der Ansprüche 6 bis 13, bei welchem der Ablauf zur Verwaltung von Einstellungen des Weiteren den Schritt umfasst, bei dem eine Einstellung des bestimmten Parameters, die in dem Schritt vorgenommen wurde, mit welchem dem Benutzer die Möglichkeit zur Bestimmung des ersten oder zweiten Kommunikationsstandards gegeben wird, in einer Speichereinheit des Rechners (10.1) abgespeichert wird.

15. Computerprogrammprodukt nach einem der Ansprüche 6 bis 14, bei welchem der Ablauf zur Verwaltung von Einstellungen des Weiteren den Schritt umfasst, bei dem eine Einstellung des bestimmten Parameters, die in dem Schritt vorgenommen wurde, mit welchem dem Benutzer die Möglichkeit zur Bestimmung des ersten oder zweiten Kommunikationsstandards gegeben wird, in einer Speichereinheit der Zielvorrichtung (20) abgespeichert wird.

16. Computerprogrammprodukt nach einem der Ansprüche 6 bis 15, bei welchem der Ablauf zur Verwaltung von Einstellungen des Weiteren die folgenden Schritte umfasst:
einem Benutzer die Möglichkeit zur Auswahl geben, ob eine Einstellung des bestimmten Parameters, die in dem Schritt vorgenommen wurde, mit welchem dem Benutzer die Möglichkeit zur Bestimmung des ersten oder zweiten Kommunikationsstandards gegeben wird, in einer Speichereinheit des Rechners oder in einer Speichereinheit der Zielvorrichtung abgespeichert werden soll, und
Abspeichern der Einstellung in der ausgewählten Speichereinheit.

17. Computerprogrammprodukt nach einem der Ansprüche 8 bis 16, bei welchem der Ablauf zur Verwaltung von Einstellungen des Weiteren den Schritt umfasst, bei dem mindestens eine Einstellung des Bestimmungsmodus oder eine Einstellung der selektiv bestimmten Art des Setzbildschirms oder des Bestimmungsmodus bei Ende des Ablaufs zur Einstellungsverwaltung in einer Speichereinheit des Rechners (10.1) abgespeichert wird.

18. Computerprogrammprodukt nach einem der Ansprüche 8 bis 17, bei welchem der Ablauf zur Verwaltung von Einstellungen des Weiteren den Schritt umfasst, bei dem mindestens eine Einstellung aus der Gruppe der Einstellung des Bestimmungsmodus, einer Einstellung der selektiv bestimmten Art des Setzbildschirms und der Einstellung des Bestimmungsmodus bei Ende des Ablaufs zur Einstellungsverwaltung in einer Speichereinheit der Zielvorrichtung (20) abgespeichert wird.

19. Computerprogrammprodukt nach einem der Ansprüche 8 bis 18, bei welchem der Ablauf zur Verwaltung von Einstellungen des Weiteren die folgenden Schritte umfasst:
einem Benutzer die Möglichkeit zur Auswahl geben, ob mindestens eine der Einstellungen aus der Gruppe der Einstellungen des Bestimmungsmodus, einer selektiv bestimmten Einstellung der Art des Einstellbildschirms und des Bestimmungsmodus bei Beendigung des Ablaufs zur Verwaltung von Einstellungen in einer Speichereinheit des Rechners oder in einer Speichereinheit der Zielvorrichtung abzuspeichern ist, und
Abspeichern von mindestens einer der Einstellungen aus der Gruppe der Einstellung des Bestimmungsmodus, der selektiv bestimmten Einstellung des Einstellbildschirms und der Einstellung des Bestimmungsmodus bei Beendigung des Ablaufs zur Verwaltung von Einstellungen in der ausgewählten Speichereinheit.

20. Computerprogrammprodukt nach einem der vorhergehenden Ansprüche, bei welchem der Ablauf zur Verwaltung von Einstellungen des Weiteren die folgenden Schritte umfasst:
Überprüfen darauf, ob ein dem vom Benutzer bestimmten Parameter entsprechender Kommunikationsstandard mit einem IP-Modus der Zielvorrichtung (20) übereinstimmt, und
Melden eines Anpassungsfehlers an den Benutzer, wenn in dem Überprüfungsschritt entschieden wurde, dass der dem vom Benutzer bestimmten Parameter entsprechende Kommunikationsstandard nicht mit dem IP-Modus der Zielvorrichtung (20) übereinstimmt.

21. Vorrichtung (10.1), die zur Verwaltung von Einstellungen der Parameter einer Zielvorrichtung (20) ausgelegt ist, die über ein Netzwerk mit der Vorrichtung verbunden ist, welche folgendes aufweist:
eine Einheit zur Bestimmung von Parametern, welche einem Benutzer die Möglichkeit gibt, einen auf die Zielvorrichtung zu setzenden Parameter zu bestimmen, wobei der Parameter die Kommunikation entsprechend einem jeweiligen Kommunikationsstandard ermöglicht und mindestens eine von weiteren Vorrichtungen in die Lage versetzt, eine Funktion der Zielvorrichtung (20) über das Netzwerk zu nutzen, und die Zielvorrichtung zur Nutzung einer Funktion einer anderen Vorrichtung (10) über das Netzwerk frei schaltet;
eine Einheit zur Anweisung des Setzens eines Parameters zum Anweisen der Zielvorrichtung (20) über das Netzwerk, den vom Benutzer bestimmten Parameter zu setzen; und
eine Betriebsart-Umschalteinheit (112, 114), die so ausgelegt ist, dass sie im Ansprechen auf die Erfüllung einer Umschaltbedingung einen Bestimmungsmodus auf einen ersten oder einen zweiten Modus umschaltet, wobei es sich bei dem Bestimmungsmodus um einen Anzeigemodus handelt, welcher den Benutzer in die Lage versetzt, den zu setzenden Parameter auf einer dem Anzeigemodus entsprechenden Bildschirmdarstellung zu bestimmen, wobei der erste Modus es dem Benutzer ermöglicht, entweder einen ersten Parameter entsprechend einem ersten Kommunikationsstandard oder einen zweiten Parameter entsprechend einem zweiten Kommunikationsstandard zu bestimmen, der sich vom ersten Kommunikationsstandard unterscheidet, und wobei der zweite Modus es dem Benutzer ermöglicht, sowohl den ersten Parameter als auch den zweiten Parameter zu bestimmen, wobei dem ersten Parametern oder dem zweiten Parameter jeweils eine höhere Priorität als dem jeweils anderen Parameter zugewiesen ist.

22. System zur Verwaltung von Einstellungen, welches folgendes aufweist:
eine Zielvorrichtung (20), an welche Parameter über ein Netzwerk gesendet werden können, und
die Vorrichtung (10.1) nach Anspruch 21, die zur Verwaltung von Einstellungen von Parametern der Zielvorrichtung über das Netzwerk mit der Zielvorrichtung (20) verbunden ist.

23. Verfahren zur Verwaltung von Einstellungen für eine Verwaltungsvorrichtung (10.1), die zur Kommunikation mit einer Zielvorrichtung (20) über ein Netzwerk geeignet ist, welches folgende Schritte umfasst:
einem Benutzer die Möglichkeit zur Bestimmung eines auf eine Zielvorrichtung (20) zu setzenden Parameters geben, wobei der Parameter eine Kommunikation entsprechend einem jeweiligen Kommunikationsstandard ermöglicht und mindestens eine von weiteren Vorrichtungen (10) in die Lage versetzt, eine Funktion der Zielvorrichtung (20) über das Netzwerk zu verwenden, und die Zielvorrichtung (20) in die Lage versetzt, eine Funktion einer anderen Vorrichtung (10) über das Netzwerk zu verwenden;
Anweisen der Zielvorrichtung (20) über das Netzwerk, den bestimmten Parameter zu setzen; und
im Ansprechen auf die Erfüllung einer Umschaltbedingung Umschalten eines Bestimmungsmodus auf einen ersten Modus oder einen zweiten Modus, wobei es sich bei dem Bestimmungsmodus um einen Anzeigemodus handelt, welcher dem Benutzer die Möglichkeit gibt, den zu setzenden Parameter auf einer dem Anzeigemodus entsprechenden Bildschirmabbildung zu setzen, wobei der erste Modus es dem Benutzer ermöglicht, entweder einen ersten Parameter entsprechend einem ersten Kommunikationsstandard oder einen zweiten Parameter entsprechend einem zweiten Kommunikationsstandard zu bestimmen, der sich von dem ersten Kommunikationsstandard unterscheidet, und wobei der zweite Modus es dem Benutzer ermöglicht, sowohl den ersten Parameter als auch den zweiten Parameter zu bestimmen, wobei dem ersten Nutzungsparameter oder dem zweiten Nutzungsparameter eine höhere Priorität als dem jeweils anderen Parameter zugewiesen wird.

## Revendications

1. Produit de programme d'ordinateur comprenant des instructions lisibles par ordinateur qui amènent un ordinateur (10.1) à effectuer un processus de gestion de réglages comprenant les étapes consistant à :
autoriser un utilisateur à désigner un paramètre à régler sur un dispositif cible (20), le au moins un paramètre permettant une communication selon une norme de communication respective et permettant à d'autres dispositifs (10) d'utiliser une fonction du dispositif cible (20) par le biais d'un réseau et permettant au dispositif cible d'utiliser une fonction d'un autre dispositif (10) par le biais du réseau ;
donner des instructions au dispositif cible (20) par le biais du réseau pour régler le paramètre désigné ; et
en réponse à la satisfaction d'une condition de commutation, commuter un mode de désignation sur un parmi un premier mode et un second mode, le mode de désignation étant un mode d'affichage autorisant l'utilisateur à désigner le paramètre à régler sur une image d'écran correspondant au mode d'affichage, le premier mode qui autorise l'utilisateur à désigner soit un premier paramètre selon une première norme de communication ou un second paramètre selon une seconde norme de communication différente de la première norme de communication, et le second mode qui autorise l'utilisateur à désigner à la fois le premier paramètre et le second paramètre, dans lesquels un parmi le premier paramètre et le second paramètre se voient attribuer une priorité plus élevée que l'autre.

2. Produit de programme d'ordinateur selon la revendication 1, dans lequel la première norme de communication et la seconde norme de communication sont des versions différentes de la même norme de communication.

3. Produit de programme d'ordinateur selon la revendication 2, dans lequel la première norme de communication et la seconde norme de communication sont IPv4 et IPv6, respectivement.

4. Produit de programme d'ordinateur selon la revendication 1, 2 ou 3, dans lequel l'étape de commutation évalue que la condition de commutation est satisfaite et commute le mode de désignation en réponse à une opération qui est effectuée au travers d'une unité d'entrée de l'ordinateur (10.1).

5. Produit de programme d'ordinateur selon l'une quelconque des revendications précédentes, dans lequel l'étape de commutation commute le mode de désignation en mettant à jour des informations de mode de désignation enregistrées dans une zone de stockage prescrite.

6. Produit de programme d'ordinateur selon l'une quelconque des revendications précédentes, dans lequel :
le processus de gestion de réglages comprend en outre l'étape consistant à autoriser un utilisateur à désigner une parmi les première et seconde normes de communication devant se voir attribuer une priorité plus élevée dans le second mode, et
dans lequel, dans le second mode, l'étape consistant à autoriser l'utilisateur à désigner le paramètre à régler autorise l'utilisateur à désigner le paramètre selon lequel un parmi les premier ou second paramètres se voient attribuer une priorité plus élevée que l'autre parmi les premier ou second paramètres.

7. Produit de programme d'ordinateur selon l'une quelconque des revendications précédentes, dans lequel :
l'étape consistant à autoriser un utilisateur à désigner le paramètre à régler sur le dispositif cible (20) comporte l'affichage d'un écran de réglage, l'écran de réglage ayant au moins une fenêtre d'entrée qui autorise l'utilisateur à effectuer une opération destinée à saisir le paramètre au travers d'une unité d'entrée de l'ordinateur (10.1), et
l'étape consistant à donner des instructions comporte l'étape consistant à donner des instructions au dispositif cible (20) afin de régler le paramètre saisi dans la fenêtre d'entrée de l'écran de réglage, et
l'étape consistant à commuter le mode de désignation commute un mode d'affichage de l'écran de réglage sur un parmi les premier et second modes lorsque la condition de commutation est satisfaite.

8. Produit de programme d'ordinateur selon la revendication 7, dans lequel le processus de gestion de réglages comprend en outre l'étape consistant à autoriser un utilisateur à désigner de manière sélective un parmi une pluralité de types d'écrans de réglage en tant que l'écran de réglage affiché dans le second mode dans l'étape consistant à autoriser un utilisateur à désigner le paramètre à régler sur le dispositif cible (20).

9. Produit de programme d'ordinateur selon l'une quelconque des revendications précédentes, dans lequel :
le processus de gestion de réglages comprend en outre l'étape consistant à vérifier si le dispositif cible (20) est capable d'utiliser la fonction selon la première norme de communication et la seconde norme de communication, et
dans lequel l'étape consistant à commuter le mode de désignation commute le mode de désignation sur le second mode uniquement lorsque l'étape consistant à vérifier évalue que le dispositif cible est capable d'utiliser la fonction selon la première norme de communication et la seconde norme de communication, à la fois.

10. Produit de programme d'ordinateur selon l'une quelconque des revendications précédentes, dans lequel :
le processus de gestion de réglages comprend en outre l'étape consistant à vérifier si le dispositif cible (20) est capable d'utiliser la fonction selon la première norme de communication et la seconde norme de communication, et
lorsque l'étape consistant à vérifier évalue que le dispositif cible est capable d'utiliser la fonction selon la première norme de communication et la seconde norme de communication, à la fois, l'étape consistant à commuter le mode de désignation commute le mode de désignation sur le second mode, et
lorsque l'étape consistant à vérifier évalue que le dispositif cible n'est pas capable d'utiliser la fonction selon la première norme de communication et la seconde norme de communication, à la fois, l'étape consistant à commuter le mode de désignation commute le mode de désignation sur un mode qui interdit à l'utilisateur de désigner des paramètres concernant une norme de communication avec laquelle le dispositif cible n'est pas capable d'utiliser la fonction.

11. Produit de programme d'ordinateur selon l'une quelconque des revendications précédentes, dans lequel le processus de gestion de réglages comprend en outre les étapes consistant à :
vérifier si le dispositif cible (20) est capable de communiquer selon chacune parmi les première et seconde normes de communication ; et
signaler une mauvaise concordance à l'utilisateur lorsque le mode de désignation ne concorde pas avec des normes de communication au moyen desquelles le dispositif cible (20) a été évalué par l'étape consistant à vérifier comme étant capable d'établir une communication.

12. Produit de programme d'ordinateur selon l'une quelconque des revendications précédentes, dans lequel le processus de gestion de réglages comprend en outre les étapes consistant à :
vérifier si le dispositif cible est capable d'établir une communication selon chacune parmi les première et seconde normes de communication ; et
restreindre la désignation du paramètre lorsque le mode de désignation commuté ne concorde pas avec des normes de communication au moyen desquelles le dispositif cible (20) a été évalué par l'étape consistant à vérifier comme étant capable d'établir une communication.

13. Produit de programme d'ordinateur selon l'une quelconque des revendications précédentes, l'ordinateur étant dans un dispositif de gestion (10.1), capable de communiquer avec le dispositif cible (20) par le biais d'un réseau.

14. Produit de programme d'ordinateur selon l'une quelconque des revendications 6 à 13, dans lequel le processus de gestion de réglages comprend en outre une étape consistant à stocker un réglage du paramètre désigné établi dans l'étape consistant à autoriser l'utilisateur à désigner l'une parmi les première et seconde normes de communication dans une unité de stockage de l'ordinateur (10.1).

15. Produit de programme d'ordinateur selon l'une quelconque des revendications 6 à 14, dans lequel le processus de gestion de réglages comprend en outre l'étape consistant à stocker un réglage du paramètre désigné établi dans l'étape consistant à autoriser l'utilisateur à désigner l'une parmi les première et seconde normes de communication dans une unité de stockage du dispositif cible (20).

16. Produit de programme d'ordinateur selon l'une quelconque des revendications 6 à 15, dans lequel le processus de gestion de réglage comprend en outre les étapes consistant à :
autoriser un utilisateur à sélectionner si un réglage du paramètre désigné établi dans l'étape consistant à autoriser l'utilisateur à désigner l'une parmi les première et seconde normes de communication est à stocker dans une unité de stockage de l'ordinateur ou dans une unité de stockage du dispositif cible ; et
stocker le réglage dans l'unité de stockage sélectionnée.

17. Produit de programme d'ordinateur selon l'une quelconque des revendications 8 à 16, dans lequel le processus de gestion de réglages comprend en outre l'étape consistant à stocker au moins un parmi un réglage du mode de désignation, un réglage du type d'écran de réglage désigné de manière sélective et le mode de désignation lorsque le processus de gestion de réglages est terminé, dans une unité de stockage de l'ordinateur (10.1).

18. Produit de programme d'ordinateur selon l'une quelconque des revendications 8 à 17, dans lequel le processus de gestion de réglage comprend en outre l'étape consistant à stocker au moins un parmi un réglage du mode de désignation, un réglage du type d'écran de réglage désigné de manière sélective et le mode de désignation lorsque le processus de gestion de réglages est terminé, dans une unité de stockage du dispositif cible (20).

19. Produit de programme d'ordinateur selon l'une quelconque des revendications 8 à 18, dans lequel le processus de gestion de réglages comprend en outre les étapes consistant à :
autoriser un utilisateur à sélectionner si au moins un parmi un réglage du mode de désignation, un réglage du type d'écran de réglage désigné de manière sélective et le mode de désignation lorsque le processus de gestion de réglages est terminé, doit être stocké dans une unité de stockage de l'ordinateur ou dans une unité de stockage du dispositif cible ; et
stocker au moins un parmi le réglage du mode de désignation, le réglage du type d'écran de réglage désigné de manière sélective et le mode de désignation lorsque le processus de gestion de réglage est terminé, dans l'unité de stockage sélectionnée.

20. Produit de programme d'ordinateur selon l'une quelconque des revendications précédentes, dans lequel le processus de gestion de réglages comprend en outre les étapes consistant à :
vérifier si une norme de communication correspondant au paramètre désigné par l'utilisateur correspond à un mode IP du dispositif cible (20) ; et
signaler une mauvaise concordance à l'utilisateur lorsque la norme de communication correspondant au paramètre désigné par l'utilisateur est évaluée par l'étape consistant à vérifier comme ne concordant pas avec le mode IP du dispositif cible (20).

21. Appareil (10.1) configuré afin de gérer des réglages de paramètre d'un dispositif cible (20) qui est connecté à l'appareil par le biais d'un réseau, comprenant :
une unité de désignation de paramètres destinée à autoriser un utilisateur à désigner un paramètre à régler sur le dispositif cible, le paramètre permettant une communication selon une norme de communication respective et permettant à au moins un parmi d'autres dispositifs d'utiliser une fonction du dispositif cible (20) par le biais du réseau et permettant au dispositif cible d'utiliser une fonction d'un autre dispositif (10) par le biais du réseau ;
une unité donnant des instructions de réglage de paramètres destinée à donner des instructions au dispositif cible (20) par le biais du réseau afin de régler le paramètre désigné par l'utilisateur ; et
une unité de commutation de modes (112, 114) qui, en réponse à la satisfaction d'une condition de commutation, est agencée afin de commuter un mode de désignation sur un parmi un premier et un second modes, le mode de désignation étant un mode d'affichage autorisant l'utilisateur à désigner le paramètre à régler sur une image d'écran correspondant au mode d'affichage, le premier mode autorisant l'utilisateur à désigner soit un premier paramètre selon une première norme de communication soit un second paramètre selon une seconde norme de communication différente de la première norme de communication, et le second mode qui autorise l'utilisateur à désigner à la fois le premier paramètre et le second paramètre, dans lesquels un parmi les premiers paramètres ou les seconds paramètres se voit attribuer une priorité plus élevée que l'autre.

22. Système de gestion de réglages comprenant :
un dispositif cible (20) sur lequel des paramètres peuvent être réglés par le biais d'un réseau ; et
l'appareil (10.1) selon la revendication 21 connecté au dispositif cible (20) par le biais du réseau pour gérer des réglages des paramètres du dispositif cible.

23. Procédé de gestion de réglages destiné à un dispositif de gestion (10.1) capable de communiquer avec un dispositif cible (20) par le biais d'un réseau comprenant les étapes consistant à :
autoriser un utilisateur à désigner un paramètre à régler du dispositif cible, le paramètre permettant une communication selon une norme de communication respective et permettant à au moins un parmi d'autres dispositifs (10) d'utiliser une fonction du dispositif cible (20) par le biais du réseau et permettant au dispositif cible (20) d'utiliser une fonction d'un autre dispositif (10) par le biais du réseau ;
donner des instructions au dispositif cible (20) par le biais du réseau afin de régler le paramètre désigné ; et
en réponse à la satisfaction d'une condition de commutation, commuter un mode de désignation sur un parmi un premier mode et un second mode, le mode de désignation étant un mode d'affichage autorisant l'utilisateur à désigner le paramètre à régler sur une image d'écran correspondant au mode d'affichage, le premier mode qui autorise l'utilisateur à désigner soit un premier paramètre selon une première norme de communication soit un second paramètre selon une seconde norme de communication différente de la première norme de communication, et le second mode qui autorise l'utilisateur à désigner à la fois le premier paramètre et le second paramètre, dans lesquels un parmi le premier paramètre d'utilisation ou le second paramètre d'utilisation se voit attribuer une priorité plus élevée que l'autre.
